(19) Europäisches Patentamt / European Patent Office / Office européen des brevets

(11) **EP 4 435 894 A1**

(12) **EUROPEAN PATENT APPLICATION**

(43) Date of publication:
**25.09.2024   Bulletin 2024/39**

(21) Application number: **23194442.2**

(22) Date of filing: **31.08.2023**

(51) International Patent Classification (IPC):
**H01M 4/50** (2010.01)      **H01M 4/52** (2010.01)

(52) Cooperative Patent Classification (CPC):
**H01M 4/50; H01M 4/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **20.03.2023   JP 2023044358**

(71) Applicant: **KABUSHIKI KAISHA TOSHIBA**
**Minato-ku**
**Tokyo 105-0023 (JP)**

(72) Inventors:
• **Ise, Kazuki**
  **Tokyo, 105-0023 (JP)**
• **Hoshina, Keigo**
  **Tokyo, 105-0023 (JP)**
• **Harada, Yasuhiro**
  **Tokyo, 105-0023 (JP)**
• **Takami, Norio**
  **Tokyo, 105-0023 (JP)**

(74) Representative: **Hoffmann Eitle**
**Patent- und Rechtsanwälte PartmbB**
**Arabellastraße 30**
**81925 München (DE)**

(54)   **ACTIVE MATERIAL, ELECTRODE, SECONDARY BATTERY, BATTERY PACK, AND VEHICLE**

(57)   According to one approach, provided is an active material including a composite metal oxide containing an Mo element, an Nb element, and at least one element M selected from the group consisting of Ti, V, Ta, Fe, Co, Mn, Ni, Bi, Sb, As, P, Cr, W, B, Na, K, Mg, Al, Ca, Y and Si. A crystal structure (10) of the composite metal oxide has a non-periodic crystal structure. The active material includes the composite metal oxide as spherical particles. The spherical particles are secondary particles containing primary particles of the composite metal oxide having an average particle size from 10 nm to 300 nm, an average particle size of the secondary particles being from 1 $\mu$m to 10 $\mu$m.

EP 4 435 894 A1

F I G. 1

**Description**

FIELD

The present disclosure relates to an active material, electrode, secondary battery, battery pack, and vehicle.

BACKGROUND

In recent years, as a high energy density battery, secondary batteries such as a lithium-ion secondary battery or a nonaqueous electrolyte secondary battery have been actively studied and developed. The secondary battery is anticipated as a power source for vehicles such as hybrid automobiles, electric cars, an uninterruptible power supply for base stations for portable telephones, or the like. Therefore, the secondary battery is demanded to, in addition to having a high energy density, be excellent in other performances such as rapid charge-discharge performances and long-term reliability, as well.

One typical negative electrode adopted in a lithium ion battery is a carbon-based negative electrode which uses a carbonaceous material, such as graphite, as an active material. When a battery using a carbon-based negative electrode is repeatedly charged and discharged at a rapid rate, precipitation of dendrites of metallic lithium on the electrode may occur, raising a concern of heat generation or ignition due to internal short circuit. To address this concern, a battery has been developed which uses a metal composite oxide in a negative electrode in place of a carbonaceous material to thereby increase the operation potential of the negative electrode. For example, a battery using a spinel-type lithium titanium composite oxide $Li_4Ti_5O_{12}$ in the negative electrode has a high average operating potential of 1.55V (vs. Li/Li$^+$). Therefore, such a battery can be rapidly and stably charged and discharged, because precipitation of Li dendrites does not proceed, and also has a longer life than that of a battery which uses a carbon-based negative electrode, because Li4Ti5O12 operates at a potential at which reductive side reactions of an electrolyte solution hardly occurs . However, a battery using $Li_4Ti_5O_{12}$ in the negative electrode has a drawback in that the theoretical capacity of the active material is as low as 175 mAh/g, and so, the energy density of the battery is lower than that of a battery having a carbon-based negative electrode.

For this reason, use of a monoclinic niobium titanium oxide $TiNb_2O_7$ has been considered. $TiNb_2O_7$ is an active material which exhibits high capacity while having an operating potential near 1 V (vs. Li/Li$^+$) based on the oxidation-reduction potential of lithium. Thus, an electrode with $TiNb_2O_7$ is expected to achieve a volume energy density beyond that of the carbon-based negative electrode. However, for full-scale commercialization of electric vehicles, further enhancement of the energy density of lithium ion secondary batteries is desired in view of achieving increased traveling distance, etc. , and thus, development of a rapid-charge battery having even higher capacity is being desired. As a matter of course, deterioration of other battery performance such as life performance as a tradeoff for high capacity is not desirable.

BRIEF DESCRIPTION OF THE DRAWINGS

FIG. 1 is a schematic diagram showing an example of a crystal structure that is included in a composite metal oxide included in an active material according to an approach.
FIG. 2 is a schematic diagram showing an example of a crystal structure that may be included in a composite metal oxide included in the active material according to the approach.
FIG. 3 is a cross-sectional view schematically showing an example of a secondary battery according to an approach.
FIG. 4 is an enlarged cross-sectional view of section A of the secondary battery shown in FIG. 3.
FIG. 5 is a partially cut-out perspective view schematically showing another example of the secondary battery according to an approach.
FIG. 6 is an enlarged cross-sectional view of section B of the secondary battery shown in FIG. 5.
FIG. 7 is a perspective view schematically showing an example of a battery module according to an approach.
FIG. 8 is an exploded perspective view schematically showing an example of a battery pack according to an approach.
FIG. 9 is a block diagram showing an example of an electric circuit of the battery pack shown in FIG. 8.
FIG. 10 is a partially see-through diagram schematically showing an example of a vehicle according to an approach.
FIG. 11 is a diagram schematically showing an example of a control system related to an electric system in the vehicle according to an approach.
FIG. 12 is a scanning electron microscope image of 50000 times magnification of a composite metal oxide powder obtained in Example 1.
FIG. 13 is a scanning electron microscope image of 10000 times magnification of a composite metal oxide powder obtained in Example 1.

FIG. 14 is a scanning electron microscope image of 50000 times magnification of a composite metal oxide powder obtained in Comparative Example 1.

FIG. 15 is a scanning electron microscope image of 10000 times magnification of a composite metal oxide powder obtained in Comparative Example 1.

FIG. 16 is a scanning electron microscope image of 20000 times magnification of a composite metal oxide powder obtained in Comparative Example 2.

FIG. 17 is a scanning electron microscope image of 10000 times magnification of a composite metal oxide powder obtained in Comparative Example 2.

DETAILED DESCRIPTION

According to one approach, provided is an active material including a composite metal oxide containing an Mo element, an Nb element, and at least one element M selected from the group consisting of Ti, V, Ta, Fe, Co, Mn, Ni, Bi, Sb, As, P, Cr, W, B, Na, K, Mg, Al, Ca, Y and Si. A crystal structure of the composite metal oxide has a non-periodic crystal structure. The active material includes the composite metal oxide as spherical particles. The spherical particles are secondary particles containing primary particles of the composite metal oxide having an average particle size from 10 nm to 300 nm, an average particle size of the secondary particles being from 1 $\mu$m to 10 $\mu$m.

According to another approach, provided is an electrode including the above active material.

According to a further other approach, provided is a secondary battery including a positive electrode, a negative electrode, and an electrolyte. The positive electrode or the negative electrode includes the above electrode.

According to a still another approach, provided is a battery pack including the above secondary battery.

In addition, according an approach, provided is a vehicle including the above battery pack.

According to the above approaches, provided is an active material and electrode that can realize a high capacity and long-life secondary battery, a secondary battery and battery pack with high capacity and long-life, as well as a vehicle including the battery pack.

Various factors are known to limit the life of a battery. One of them is cracking of electrode active material particles and cut-off of electrically conductive paths due to the cracking. Another is degradation of the electrode active material and electrolyte (e.g., a liquid electrolyte) due to side-reactions between the electrolyte and active material.

In order to obtain a high-capacity material, a material capable of a large amount of charge compensation upon insertion of carrier ions (e.g., lithium ions) is desirably selected. Thus, a composite oxide containing, for example, a hexavalent element molybdenum (Mo) may be adopted as a compound having a higher capacity.

Hereinafter, approaches will be described with reference to the drawings. The same reference signs are applied to common components throughout the approaches and overlapping explanations are omitted. Each drawing is a schematic view for explaining the approach and promoting understanding thereof; though there may be differences in shape, size and ratio from those in an actual device, such specifics can be appropriately changed in design taking the following explanations and known technology into consideration.

(First Approach)

According to a first approach, provided is an active material including a composite metal oxide having a non-periodic crystal structure. The composite metal oxide contains Mo element, Nb element, and element M. Element M is at least one selected from the group consisting of Ti, V, Ta, Fe, Co, Mn, Ni, Bi, Sb, As, P, Cr, W, B, Na, K, Mg, Al, Ca, Y and Si. The composite metal oxide is included in the active material as spherical particles. The spherical particles are secondary particles that contain primary particles of the composite metal oxide, an average particle size of the primary particles is from 10 nm to 300 nm, and an average particle size of the secondary particles is from 1 $\mu$m to 10 $\mu$m.

The above composite metal oxide may be a compound represented by general formula $Li_aM_bNbMo_cO_d$, for example. In the general formula, M is at least one of the above element M, and is selected from the group consisting of Ti, V, Ta, Fe, Co, Mn, Ni, Bi, Sb, As, P, Cr, W, B, Na, K, Mg, Al, Ca, Y and Si. Each of the subscripts in the formula respectively satisfies, $0 \leq a \leq b+2+3c$, $0 \leq b \leq 1.5$, $0 \leq c \leq 0.5$, and $2.33 \leq d/(1+b+c) \leq 2.50$.

The active material may be an active material for a battery. The active material may be, for example, an electrode active material used in an electrode of a secondary battery such as a lithium ion battery, a nonaqueous electrolyte battery, etc. More specifically, the active material may be, for example, a negative electrode active material used in the negative electrode of a secondary battery.

A high-capacity long-life secondary battery can be realized by using, as an electrode active material, a composite oxide having the above-mentioned non-periodic crystal structure composed of Mo element, Nb element, and at least one of the above elements M.

<Crystal Structure>

The composite metal oxide included in the active material according to the first approach corresponds to one portion of oxide materials having a structure of a Wadsley-Roth phase, which is a crystal phase among niobium-containing oxide materials. The Wadsley-Roth phase has been reported to take a crystal structure with a ratio of oxygen O to a metal element Me in the composition that is in the range of $2.33 \leq A_O/A_{Me} \leq 2.65$, assuming $A_O$ and $A_{Me}$ as representing the number of atoms of oxygen and the number of atoms of the metal element, respectively. For example, $TiNb_2O_7$ has a crystal structure on the reduced side where $A_O/A_{Me} = 2.33$.

Herein, "reduced" means that the proportion of oxygen within the structure is low. The Wadsley-Roth phase takes a crystal structure in which a structure with vertex-sharing oxygen-metal octahedra forms a rhenium oxide-type block structure, and the blocks share the rhombohedra of the octahedra or a tetrahedron is interposed between the blocks and shares vertices to thereby connect the rhenium oxide-type blocks ($ReO_3$-type blocks) in a two-dimensional direction. The crystal structure on the reduced side takes a structure with small rhenium oxide-type blocks. Although the rhenium oxide-type crystal structure has cavities into which a large amount of Li can be inserted, the crystal structure is highly symmetric; thus, a change in the bond length between the metal element and oxygen for resolving the charge repulsion occurring upon Li insertion hardly occurs. As such, the rhenium oxide-type crystal structure can be said to be a structure which restricts Li insertion, due to the charge repulsion occurring upon Li insertion. With the crystal structure on the reduced side, the ratio $A_O/A_{Me}$ becomes small, and thus the number of oxygen in the structure is reduced, leading to reduction of the size of the rhenium oxide-type blocks. Accordingly, there may be obtained a crystal structure capable of volume expansion due to a change in the bond length between the metal element and oxygen when Li is inserted. Therefore, while having a wide cavity by including the rhenium oxide-type crystal structure, Li insertion in great amount can be accomplished since there is no restriction on the structural change occurring when Li is inserted.

With the composite metal oxide included in the active material according to the first approach, as well, by taking a reduced-side crystal structure as with $TiNb_2O_7$, insertion of greater amounts of lithium (Li) into the crystal structure has become possible, and thus a crystal structure with a large reversible capacity has been achieved. Namely, the crystal structure of the composite oxide is a crystal structure of a reduced side belonging to the Wadsley-Roth phase consisting of three elements including molybdenum and element M in addition to niobium.

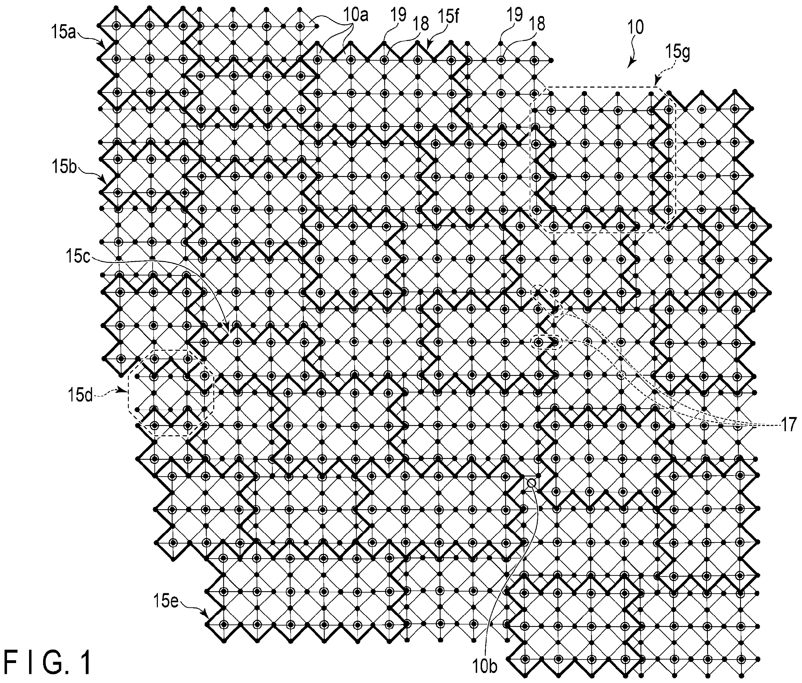

FIG. 1 shows a schematic view of an example of a crystal structure that may be included in the composite metal oxide. The crystal structure 10 includes octahedra 10a and tetrahedra 10b each configured of a metal element 18 and oxygen 19. The octahedra 10a are coupled to each other via sharing vertices, thereby forming a rhenium oxide-type block ($ReO_3$-type block). FIG. 1 shows the crystal structure 10 as viewed from the stacking direction of the $ReO_3$ blocks. In the crystal structure 10, the $ReO_3$ blocks (e.g., block 15a) surrounded by the thick lines and the $ReO_3$ blocks (e.g., block 15d) indicated just by the thin lines differ in the planes in which the metal elements 18 are arranged. The feature of this example is that the structure does not have periodicity. Blocks having different sizes are connected and present according to the Wadsley-Roth phase arrangement form. A small block has a side of two octahedra, and a large block has a side of six octahedra. For example, block 15a consists of $3 \times 3$ octahedra 10a, block 15b consists of $2 \times 3$ octahedra 10a, block 15c consists of $2 \times 4$ octahedra 10a, block 15d consists of $2 \times 2$ octahedra 10a, block 15e consists of $3 \times 6$ octahedra 10a, block 15f consists of $5 \times 3$ octahedra 10a, and block 15g consists of $4 \times 4$ octahedra 10a. The sizes may be adjusted freely according to a metal/oxygen ratio dependent on a mixing state of Nb, Mo and elements M, and are not limited. A majority of the blocks are connected by sharing edges 17 of the octahedra, and a part of the connections may include that by sharing vertices of the tetrahedra 10b.

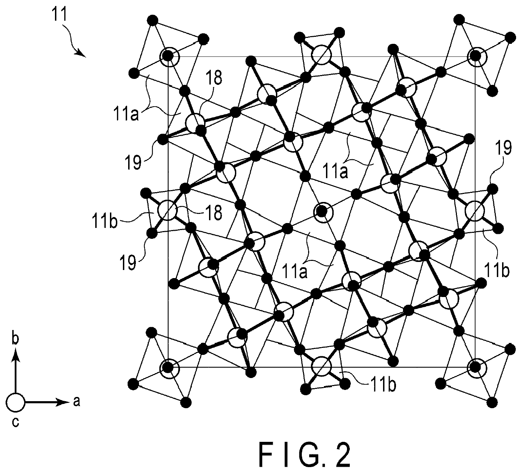

FIG. 2 shows a schematic view of another example of a crystal structure that may be included in the composite metal oxide. This example corresponds to a crystal structure in which a ratio of the number of atoms $A_O$ of oxygen O to the number of atoms $A_{Me}$ of the metal element Me included as constituent elements is $A_O/A_{Me} = 2.50$. This crystal structure does have periodicity. In FIG. 2, the crystal structure is presented in terms of a unit lattice in the [001] direction, as viewed along the c-axis direction. The notation of space group of the crystal structure belongs to I-4, and the space group number thereof is attributed to 82. The "space group" as mentioned herein corresponds to the content of "International Tables for Crystallography", specifically, the content of Vol. A: Space-group symmetry (Second online edition (2016); ISBN: 978-0-470-97423-0, doi: 10.1107/97809553602060000114) of this document. The space group can also be described, however, as being based on a simple cubic lattice having four-fold rotation axis or four-fold rotoinversion axis similar to the I-4 (space group No. 82), such as P4 (space group No. 75), I4 (space group No. 79), P-4 (space group No. 81), $P4_2/n$ (space group No. 86), I4/m (space group No. 87), P4nc (space group No. 104), P-$42_1$c (space group No. 114), and P-4n2 (space group No. 118). The space group may vary when the composition ratio deviates from a stoichiometric composition ratio due to adjustment thereof or when structural distortion occurs due to the presence of a heterogeneous phase. The crystal structure 11 includes octahedra 11a and tetrahedra 11b each configured of a metal element 18 and oxygen 19. The octahedra 11a are coupled to each other via sharing vertices, thereby forming a rhenium oxide-type block ($ReO_3$-type block). The size of the block corresponds to $3 \times 3 = 9$ octahedra 11a. The rhenium oxide-type nonuplet block forms a plane in the a-axis direction and the b-axis direction by either sharing the edges of the octahedra 11a or sharing the vertices of the tetrahedra 11b. A plurality of planes including the nine octahedra 11a are connected to each other by sharing the edges of the octahedra or the vertices of the tetrahedra also towards the c-axis side, thereby forming the crystal structure.

When the crystal structure 10 shown in FIG. 1 is compared with the crystal structure 11 shown in FIG. 2, FIG. 1 has fewer tetrahedra as compared to FIG. 2, and by thus having the connection via the vertices of the tetrahedra replaced by the connection via the edges of the octahedra, the crystal structure 10 has more edge-sharing octahedra, and is increased in octahedron lattice distortion. Therefore, in the crystal structure 10 of FIG. 1, due to large octahedron lattice distortion, structural alleviation through change in the bond length upon Li insertion is facilitated, and the insertion amount of Li can be increased. Furthermore, in the crystal structure 10 of FIG. 1, since edge-sharing of octahedra are included without having a periodic structure, the asymmetry of the framework can be maintained even with the insertion amount of Li being increased. Thus, the crystal structure 10 of FIG. 1 has a further improved reversible capacity as compared with the crystal structure 11 of FIG. 2. Accordingly, by including the crystal structure of FIG. 1 having a non-periodic crystal structure in the active material, the capacity can be improved.

With the above non-periodic crystal structure, the metal/oxygen ratio that varies due to a change in the composition ratio can be adjusted by changing the size of the $ReO_3$ block and the number of connections by the edge-sharing octahedra and vertex-sharing tetrahedra. Therefore, the oxygen/metal ratio can be changed depending on the composition ratio, and can be adjusted freely.

Molybdenum (Mo) can be incorporated into the crystal structure not only in the form of a hexavalent element but also in the form of a tetravalent or pentavalent element. The valence of Mo is determined in such a manner that the charge balance is adjusted in accordance with the oxygen amount and the mixing amount of niobium and element M in the crystal structure shown in FIG. 1 or FIG. 2. With the hexavalent element, the charge compensation with the element M such as Ti at the time of Li insertion is a three-electron reaction, and thus, the theoretical capacity of Li capable of being inserted can be improved. Mo as a tetravalent or pentavalent element is arranged within the crystal structure in such a manner that electrons are supplied to the d band. Therefore, by including tetravalent or pentavalent Mo, the electrical conductivity can be changed to improve battery performance. The Wadsley-Roth phase including molybdenum is known to have increased operating potential (i.e., become noble). Comparing oxides containing titanium and niobium against each other, for example, with the titanium-niobium-molybdenum composite oxide, which is one aspect according to the first approach, by virtue of having the crystal structure including molybdenum at a high concentration, the operating potential can be made higher than that of $TiNb_2O_7$. As a result, the operating potential falls within a potential region where there is little reductive side reactions of the electrolyte solution, and thus, high life performance can be achieved.

Mo may be included in the crystal structure with a valence higher than the valence estimated from the crystal structure of FIG. 1 or FIG. 2 and the balance among the oxygen amount and the metal elements. In this case, it is assumed that cationic vacancies are formed within the crystal structure and included in the structure to adjust the charge balance. With the cationic vacancies included within the structure, the electron conductivity of the active material can be improved, thereby enhancing the battery performance. On the other hand, since the cationic vacancies provide an effect of trapping Li locally within the structure, an excessive amount of cationic vacancies are not preferable from the viewpoint that in-solid movement of Li becomes inhibited.

Furthermore, in the active material, oxygen defects can be formed by setting the amount of Mo to be less than the ideal composition. Forming oxygen defects improves the electron conductivity of the active material, thereby enhancing the battery performance. Meanwhile, an excessive amount of oxygen defects causes charge repulsion of Li. Thus, an excessive amount of oxygen defects is not preferable due to inhibition of movement of Li.

The non-periodic crystal structure like that shown in FIG. 1 can be examined through observation with a high-angle annular dark field method using a scanning transmission electron microscope, which will be described later.

The composite oxide further includes as metal elements, in addition to the Nb element and the Mo element, at least one of the above-mentioned elements M. With the non-periodic structure of FIG. 1, in accordance to the change in the oxygen/metal composition ratio due to the charge compensation, through the change in the size of the $ReO_3$-type block and change in the number of edge-sharing octahedra and the vertex-sharing tetrahedra at the connecting sections, the structure can be maintained. The Mo element can be included in the structure having the valence within the structure adjusted within the range of tetravalent to hexavalent. Furthermore, with the active material, oxygen defects and cationic vacancies can be formed easily in the structure, as described above. Therefore, the degree of liberty in adjusting the charge balance in the structure is high, and the element M can thus be selected freely. As the M element, at least one can be selected from the group consisting of Ti, V, Ta, Fe, Co, Mn, Ni, Bi, Sb, As, P, Cr, W, B, Na, K, Mg, Al, Ca, Y, Zr and Si.

The above-described element M may be included within the crystal structure as a metal element constituting the above-described tetrahedra or octahedra. The element M may also be present in the active material in the form of not being included in the crystal structure of the composite oxide.

For example, vanadium (V) and phosphorus (P) can be incorporated into the crystal structure as pentavalent elements. Titanium (Ti), zirconium (Zr) and silicon (Si) can be incorporated into the structure as tetravalent elements. Iron (Fe), chromium (Cr), aluminum (Al), bismuth (Bi), antimony (Sb), boron (B), arsenic (As), cobalt (Co), manganese (Mn), nickel (Ni) and yttrium (Y) can be incorporated into the crystal structure as trivalent elements. Magnesium (Mg) and calcium (Ca) can be incorporated into the crystal structure as divalent elements. Potassium (K) and sodium (Na) can be incorporated into the crystal structure as monovalent elements. Among these elements, a tetravalent element has a higher charge than an element of a valence of 3 or less; thus, a tetravalent element can be contained in a large amount without reducing the oxygen/metal ratio in the structure, allowing the Mo ratio in the structure to be increased, and is therefore preferable. In particular, titanium (Ti) is an element that can be contained in the structure in the largest amount and be easily incorporated into the structure since the ionic radius is close to that of the pentavalent Nb element, and therefore most preferred among the elements M.

Tantalum (Ta) as a pentavalent element can substitute Nb. Since Ta and Nb belong to the same group in the periodic table, they have similar physical and chemical properties. Thus, even if Nb is substituted by Ta, equivalent battery performance can be achieved.

Tungsten (W) as a hexavalent element can substitute Mo in part. In general, the W-containing Wadsley-Roth phase is known to have a high rate performance because of its high in-solid Li diffusion rate. Therefore, containing W can further enhance the rate performance of the active material.

<Active Material Particles>

The active material according to the first approach takes a form of spherical particles. For example, the active material may be formed of spherically shaped secondary particles of the composite oxide having the non-periodic crystal structure and containing Mo, Nb, and the element M.

Since the secondary particles are granulated into a spherical shape, the difference between particles in terms of contact between the electrolyte and the active material is small. Accordingly, the Li insertion-extraction reaction can be made uniform at the time of charge and discharge in an electrode in which the spherical secondary particles are used as an active material. Therefore, side reactions can be suppressed. In addition, since the change due to volume expansion and contraction at the time of Li insertion-extraction is isotropic, breaking of electrically conductive paths is suppressed. As a result, the life performance can be improved.

Herein, the term "spherical secondary particle" refers to a secondary particle in which a coefficient of form unevenness FU is 0.8 or more. The coefficient of form unevenness FU is a parameter devised focusing on the fact that a circumferential length 1 in a projected profile becomes larger relative to a cross-sectional area a, as the degree of unevenness on the periphery of the particle increases. Assume that a dimensionless quantity f representing the relationship between the circumferential length 1 and the cross-sectional area a is expressed as $f = a/l^2$. The value of f is the largest in a case where the cross-sectional shape is a circle, in which case the value $f_c$ is expressed by the equation $f_c = \pi r^2/ (2\pi r)^2$, where r represents the radius of the circle. The coefficient of form unevenness FU representing the ratio of f with respect to the value $f_c$, derived under the assumption that the cross-sectional shape is a circle, is expressed by the following formula 1:

$$FU = \frac{f}{f_c} = \frac{4\pi a}{\ell^2} \qquad (1)$$

In the formula 1, l is a circumferential length in a projected profile of a particle, and a is a cross-sectional area in the projected profile of the particle, as mentioned above, and $\pi$ is the circle constant. In a case where a target particle is a complete sphere (the projected profile is a circle), the coefficient of form unevenness FU is 1.00. A method for determining a coefficient of form unevenness FU from the projected profile of a secondary particle will be described later.

For the spherical particles, an average primary particle size is 10 nm to 300 nm. From the viewpoint of appropriate ranges of the Li diffusivity and the diffusing distance of the material in the approach, the battery can be operated stably at a low resistance by setting the primary particle size within the aforementioned range. Furthermore, cracking of primary particles due to volume expansion and contraction of the composite metal oxide at the time of Li insertion-extraction can be suppressed.

An average secondary particle size of the spherical particles is from 1 um to 10 um. On one hand, if the secondary particle size is moderately large, points of contact between particles can be suppressed, so that satisfactory electrically conductive paths between particles can be easily constructed. On the other hand, with the secondary particle size not being unnecessarily large, electrically conductive paths inside the particle can be easily ensured. By setting the secondary particle size within the aforementioned range, the electrically conductive paths of particles inside the electrode can be maintained stably, so that the life performance can be improved. The average secondary particle size refers to a particle size at which a cumulative volume value is 50% in a particle size distribution obtained by a laser diffraction particle size distribution measuring apparatus.

The BET specific surface area of the active material is preferably from 5 $m^2/g$ to 40 $m^2/g$, and more preferably 10 $m^2/g$ or more. Since a reduction of the specific surface area leads to a reduction of the amount of side reaction of the active material, the life performance can be improved. From the viewpoint of an appropriate primary particle size of the material and a material true density in the approach, the specific surface area in a case where the secondary particle (spherical particle) is an ideal sphere falls within the aforementioned range. In other words, within the aforementioned range, the specific surface area is considered to be sufficiently reduced.

The BET specific surface area refers to a specific surface area obtained by a nitrogen BET (Brunauer, Emmet and Teller) method. The method for obtaining the specific surface area based on the nitrogen BET method will be described in detail, later.

<Production Method>

The active material according to the first approach can be produced as described below.

(Liquid Phase Synthesis)

Production of the composite metal oxide is not particularly limited; however, the composite oxide may be synthesized by, for example, a solid-phase reaction method, a sol-gel method, a hydrothermal synthesis method, or the like. A production method of a titanium-niobium-molybdenum composite oxide (i.e. , element M = Ti) adopting a sol-gel method will be described as an example.

As starting materials, a titanium compound, a niobium compound, and a molybdenum compound are used. Examples of the titanium compound include titanium tetraisopropoxide, titanyl sulfate, titanium chloride, titanium ammonium oxalate and a hydrate thereof, titanium hydroxide, and titanium oxide. Examples of the niobium compound include niobium chloride, niobium ammonium oxalate and a hydrate thereof, niobium hydroxide, and niobium oxide. Examples of the molybdenum compound include molybdenum chloride, ammonium molybdate and a hydrate thereof, molybdenum hydroxide, and molybdenum oxide. In a case where an element other than Ti is selected or another element is selected together with Ti as the element M, the above titanium compounds are replaced with a compound containing the selected element M as appropriate or the compound containing the selected element M is used together with the titanium compound(s).

The starting materials are preferably dissolved in pure water or an acid in advance to form a solution. By forming a solution, a dry gel in which respective elements are uniformly mixed can be obtained, so that the reactivity can be enhanced. When the starting materials cannot be dissolved in pure water, an acid is used to dissolve them.

Examples of the acid to be used to dissolve the starting materials include citric acid and oxalic acid, and oxalic acid is preferably used in view of solubility. When oxalic acid is used, for example, the concentration is preferably set to 0.5 M to 1 M. The starting materials are preferably dissolved at a temperature of 70°C or higher in order to reduce the reaction time.

If dissolving of the starting materials is difficult, a dispersion liquid can be formed to proceed with the reaction. In this case, the average particle size of the starting materials included in the dispersion liquid is favorably 3 $\mu$m or less, and more preferably 1 $\mu$m. After a solution (or a dispersion liquid) in which the respective compounds are adjusted to a predetermined composition ratio is prepared, neutralization using an aqueous solution of ammonia is performed while heating and stirring the solution, to thereby adjust the pH. A gel liquid is obtained by adjusting the pH. By setting the pH to 5 to 8, a gel which uniformly contains the respective starting materials can be formed, whereby a dry gel which exhibits favorable reactivity during firing can be obtained.

Subsequently, the gel liquid is heated up to a temperature close to a boiling point to evaporate moisture, thereby making gelation progress. After gelation, moisture is further evaporated to perform drying, whereby a dry gel is obtained. When performing gelation and drying, for example, the whole solution may be concentrated by evaporation to obtain a dry gel. The average particle size of the dry gel produced by evaporating and concentrating the whole solution is preferably reduced to 10 $\mu$m or less, and more preferably 5 um or less by performing pulverization before the firing. Thereby, the particle size after the firing can be made small. The dry gel thus obtained is fired.

In the processes of gelation and obtaining the dry gel by evaporating the solvent, a spray dryer is preferably used. This is because, fine droplets of sol solution can be formed by spraying. Drying in the state of fine droplets makes it possible to dry while preventing particle aggregation that proceeds when drying the solvent, and thus, the particle size after drying can be made smaller and coarse particles can also be reduced. Thereby, uniformity of the reaction can be made high when firing the precursor, and also, aggregation of particles during the firing can be suppressed. The drying temperature when spray drying is preferably from 100°C to 200°C.

When firing the dry gel, pre-firing is performed at a temperature of 200°C to 500°C for 1 hour to 10 hours.

Thereby, excess organic components can be eliminated, which makes it possible to enhance the reactivity during the main firing.

The main firing is preferably performed at a temperature of 600°C to 800°C for 1 hour to 10 hours. By performing firing in such a temperature range, a target phase can be obtained while suppressing sublimation of molybdenum.

In the fired powder, a secondary particle in which particles are aggregated in an indefinite shape is formed. In a case where an electrode is constructed using an active material containing indefinite-shaped particles, the indefinite-shaped particles cannot satisfactorily maintain the electrically conductive path between particles. Furthermore, a portion where there are few points of contact between particles for the indefinite-shaped particles collapses during charge or discharge, whereby the electrically conductive paths are broken. In this manner the use of indefinite-shaped particles leads to reduction of charge and discharge performances, which is why particle shaping is performed.

For particle shaping, first, the indefinite-shaped aggregation is pulverized. This can be achieved by wet dispersion. Preferably, a slurry containing the fired powder is prepared, and pulverizing of the aggregation of particles is performed nearly to primary particles by wet bead milling using the slurry. Regarding the slurry containing the fired powder, water is preferably selected as a solvent and the slurry preferably contains 5 mass ratio or less of a dispersant with respect to the mass of the active material.

Examples of the dispersant include, for example, a surfactant, polyacrylate, polyethylene glycol, polyethylenimine, polyvinyl pyrrolidone, a styrene-maleic acid polymer, an ethylene-maleic acid polymer, hydroxyethyl cellulose, carboxymethyl cellulose, ethyl cellulose, polyvinyl alcohol, and the like. From the viewpoint of dispersing the particles nearly to a primary particle size, in the bead milling, a media diameter of 1 mm or smaller, preferably, 0.2 mm or smaller, is selected. The material of the media is preferably zirconia to prevent contamination. The frequency of contact between particles and beads is increased by using beads of a small diameter. Accordingly, the fine particle dispersion can be satisfactorily progressed, so that the above-described in-liquid dispersion nearly to the primary particle size can be effected.

Next, the slurry prepared by the wet bead milling is subjected to spray drying, so that spherically-shaped powder can be obtained. Since the particles that have been pulverized nearly to primary particles by the wet bead milling have a small particle size, Van der Waals force strongly acts on the particles. Therefore, when the crushed particles are aggregated again, the shape can be sustained due to the spray drying. Based on the principle of spray drying in which spherical liquid droplets are rapidly dried, spherical secondary particles can be formed.

The surfaces of particles obtained by the spray drying become amorphous due to collision between the media and the particles during the wet bead milling. With regard to the activated surfaces of the particles newly formed when the particles are dispersed, crystallinity is reduced due to hydration with water which is the solvent. Therefore, in order to recover the crystallinity, firing is performed again. The firing temperature is preferably from 500°C to 650°C. The non-periodic crystal structure of the composite metal oxide included in the active material according to the present approach (for example, FIG. 1) is in a low temperature phase; therefore, the crystallinity can be improved even at a low re-firing temperature. Furthermore, since thermal diffusion does not progress due to the low temperature, reaggregation does not occur. Therefore, recrystallization is possible, while maintaining the shapes of the spherical particles obtained by the spray drying.

<Various Measurement Methods>

Measurement methods for the active material will be explained below. Specifically, examination of the composite metal oxide, measurement of the average particle size of the active material particles, measurement of the coefficient of form unevenness FU of the secondary particles, and measurement of the specific surface area of the active material will be described.

In a case where an active material included in an electrode of a battery is to be taken as a sample, the measurement sample is prepared by performing a pretreatment by the following method. First, the battery is completely discharged. Next, the battery is disassembled in a glove box under an argon atmosphere, and the electrode is taken out. Next, the taken-out electrode is washed using a solvent such as ethyl methyl carbonate. Further processing is performed in accordance with the measurement to be performed, so as to prepare a sample in appropriate form.

(Examination of Composite Metal Oxide)

Examination as to whether the active material has the above-described crystal structure can be performed through a combination of a wide-angle X-ray diffraction (XRD) method and High Angle Annular Dark-Field (HAADF) method. By combining inductively coupled plasma (ICP) emission spectrometry and inert gas dissolution-infrared absorption spectroscopy, examination can be made as to whether the active material includes a composite metal oxide containing Mo, Nb, and at least one of the aforementioned elements M. Valence measurement of elements can be performed, for example, by X-ray photoelectron spectroscopy (XPS) using a characteristic X-ray.

XRD measurement is performed as follows. First, the active material is pulverized as necessary to obtain a powder sample. The average particle size of the powder sample is preferably set to 20 μm or less. The average particle size can be obtained by a laser diffraction particle size distribution measuring apparatus.

Next, the powder sample is packed in the holder portion of a glass sample plate, and the surface is made flat. As the glass sample plate, for example, a glass sample plate whose holder portion has a depth of 0.2 mm may be used.

Next, the glass sample plate is set in a powder X-ray diffraction apparatus, and the XRD spectrum is measured using Cu-Kα rays. Specific measurement conditions are, for example, as follows:

> X-ray diffraction apparatus: SmartLab available from Rigaku
> X-ray source: Cu-Kα rays
> Output: 40 kV, 200 mA
> Package measurement name: general-purpose measurement (concentration method)
> Incident parallel slit opening angle: 5°
> Incident longitudinal restriction slit length: 10 mm Light-receiving PSA: absent
> Light-receiving parallel slit opening angle: 5°
> Monochromatization method: Kβ filtering method
> Measurement mode: continuous
> Incident slit width: 0.5°
> Light-receiving slit width: 20 mm
> Measurement range (2θ): 5° to 70°
> Sampling width (2θ): 0.01°
> Scan speed: 1°/min to 20°/min

The XRD spectrum for the active material is thus obtained. In the XRD spectrum, the abscissa represents the incident angle (2θ), and the ordinate represents the diffraction intensity (cps) . The scan speed may be adjusted within a range where the number of counts for the main peak of the XRD spectrum would be 50 thousand counts or more and 150 thousand counts or less.

When an active material contained in the electrode of a battery is used as a sample, the washed electrode obtained by performing the above pretreatment is cut to about the same area as the area of the holder of the glass sample plate, to thereby obtain a measurement sample.

Next, the obtained measurement sample is directly put onto the glass holder, and XRD measurement is performed. Subsequently, measurement is performed using the XRD for materials other than the active material that may be contained in the electrode such as a current collector, electro-conductive agent, binder, and the like, thereby ascertaining XRD patterns derived from those materials. Next, if there are overlapping peaks between peaks considered to be derived from the active material and peaks of other materials in the measurement sample, the peaks of the materials other than the active material are separated. The XRD spectrum for the active material is obtained in this manner.

A Rietveld method is used to more precisely ascertain whether or not the measured sample includes the crystal structure belonging to the aforementioned tetragonal crystal structure of FIG. 2. The ascertainment can be made by examining that a value $R_{wp}$ as a reliability factor is at least 20% or less, more preferably 15% or less using, for example, RIETAN-FP as an analysis program. At this time, if there is a peak including impurities and the peak overlaps with a phase to be analyzed, the analysis precision may be degraded. In this case, analysis is preferably performed with a section that clearly overlaps with the impurities-derived peak excluded from the analysis range. This is not always the case, however, because the intensity ratio varies when a material other than the active material according to the first approach is included in the sample, when the orientation of the sample is significantly high, or when coarse particles are mixed. Therefore, the structure is determined by ascertaining that there is no contradiction in the position or relative intensity of all the peaks attributed to the crystal structure. Also, when the spectrum intensity is low and the background intensity is low, the value $R_{wp}$ may become small. Thus, the reliability factor does not have meaning in its absolute value, but has meaning in relatively determining how well the fitting is under certain measurement conditions.

A detailed explanation of the analysis method using RIETAN-FP is given in, for example, Chapter 9 "Let's use RIETAN-FP" in Izumi Nakai, Fujio Izumi, "Reality of Powder X-ray Analysis", 1st edition (2002), X-Ray Analysis Investigation Conversazione, The Japan Society for Analytical Chemistry, (Asakura Shoten).

RIETAN-FP is a program for Rietveld analysis that was available for free on the Internet at the developer's webpage (closed as of January 2023) . At least in March 2023, the program had been available through the following web archive:

http://web.archive.org/web/20220209014122fw_/http://fu jioizumi.verse.jp/download/download.html

The structure of FIG. 1 is difficult to analyze by XRD measurement since the structure does not have periodicity. In order to ascertain the structure of FIG. 1, the fine structure is preferably observed directly. The observation can be carried out through an observation by the High Angle Annular Dark-Field (HAADF) method using a Scanning Transmission Electron Microscope (STEM). From the perspective of enhancing the measured optical resolution, spherical aberration correction is preferably employed. An atomic image (10 nm $\times$ 10 nm) is obtained from a direction perpendicular to the $ReO_3$-type block, and the positional relationships of the metal elements configuring the $ReO_3$ block is examined, whereby the structure thereof can be ascertained.

In regard to the content of the respective elements of the active material particles included in the sample, with respect to that of metal elements, the content can be ascertained by the ICP emission spectrometry. With respect to that of the element O, the content can be quantified by a method such as inert gas dissolution-infrared absorption spectroscopy; however, precise quantification is difficult.

For active material particles included in the electrode, after performing the above-described pretreatment, the following treatment is further performed. After washing the electrode, a component containing an active material (e.g. , the active material-containing layer described in the second approach) is dislodged from the current collector of the electrode, for example. The portion dislodged off from the electrode is heated for a short period of time in air (at 500°C for about 1 hour), to sinter off unnecessary portions such as a binder component and carbon. Thereafter, the ICP emission analysis, etc. , can be performed to quantify the content of the respective elements.

Measurement of the valence of the metal elements contained in the composite oxide according to the XPS method can be performed as follows. For X-rays used for the measurement, hard X-rays are preferably used because the detection depth is deeper and a state closer to the bulk can be measured. The spectroscopic method using hard X-rays is also called HAXPES. By examining the position of the binding energy in the narrow spectrum of each element, the valence can be determined. For example, for Ti, the $Ti2p_{3/2}$-derived tetravalent peak is observed at 459.0 $\pm$ 0.4 eV. For Mo, the $Mo3d_{5/2}$-derived hexavalent peak is observed at 232.2 $\pm$ 0.4 eV. For Nb, the $Nb3d_{5/2}$-derived pentavalent peak is observed at 207.5 $\pm$ 0.4 eV. Cases where a low-valence element is contained can be determined, as a peak at an energy position lower than the aforementioned valence would be detected. In particular, Mo may include a valence of 5 or less.

The sample is measured in a non-destructive manner so that the element valence does not change. Accordingly, in the measurement of the composite oxide contained in the electrode, the electrode is used as a sample without extracting the materials. The measurement is performed taking precautions so that charge-up during the measurement of the sample does not affect the peak position. In order to prevent peak shift due to charge-up, it is preferable to measure the electrode in a completely discharged state. If the electrode contains an electro-conductive agent, the charge-upcan be reduced. Since the element valence also changes if the sample is damaged by long-time X-ray irradiation, precaution should be taken in this respect, as well. Moreover, if materials of different structures coexist, the peak may shift due to a change in the bonding state, and therefore, precaution should be taken to avoid confusion with a change in valence. If elements of different valences coexist, that is, if spectra coexist for plural peaks, the spectra can be separated through least-squares fitting, and the coexistence ratio can be estimated from the area ratio of the separated peaks.

As a result of the combination of measurements described above, it may be confirmed that the composite metal oxide having a non-periodic crystal structure and expressed by the aforementioned general formula $Li_aM_bNbMo_cO_d$ (where the element M and the subscripts are as those described above; herein after, omitted) is contained in the active material. The proportional content of Li represented by the subscript a in the general formula $Li_aM_bNbMo_cO_d$ varies depending on the state of charge of the electrode in which the composite oxide is used as the active material. For example, in the composite oxide contained in the negative electrode, as the battery is charged, Li is inserted and the subscript a increases, and as the battery is discharged, Li is extracted and the subscript a decreases. The subscript d reflects the amounts of cationic vacancies and oxygen vacancies.

(Measurement of Average Particle Size)

The average primary particle size of the active material can be determined by observation using a scanning electron microscope (SEM). Specifically, the average primary particle size by the SEM observation can be calculated by the following method.

First, in a primary particle included in a SEM image of a secondary particle obtained by the SEM observation, the length of the longest portion and the length of the shortest portion are measured, and the arithmetic mean value of these lengths is calculated as the primary particle size. The measurement of the primary particle size is carried out for 100 indiscriminately selected particles, and the average value thereof is set as the average primary particle size.

The average secondary particle size of the active material can be determined from a particle size distribution measured using a laser diffraction particle size analyzer. As a sample for performing the particle size distribution measurement, used is a dispersion liquid, which is obtained by diluting the active material with N-methyl-2-pyrrolidone such that the concentration of the active material becomes 0.1 mass% to 1 mass%. The particle size at which a cumulative volume value is 50% in the obtained particle size distribution is determined as the average secondary particle size.

(Measurement of Coefficient of Form Unevenness)

For the secondary particles of the composite metal oxide included in the active material, a method for measuring an average value $FU_{ave}$ of the coefficient of form unevenness FU will be described.

Specifically, first, an average particle size ($D_{50}$) is calculated from a particle size distribution chart for a plurality of active material particles constituting the active material-containing layer. The particle size distribution chart is obtained by measurement using a laser diffraction particle size distribution measuring apparatus. 100 secondary particles are extracted from among a plurality of secondary particles having a particle size (diameter) of 0.2 times to 4 times of the value of $D_{50}$. Next, the value of the coefficient of form unevenness FU of each of the particles is calculated in accordance with the above formula 1 (FU = $4\pi a/l^2$). In the formula 1, 1 is a circumferential length in a projected profile of each secondary particle, a is a cross-sectional area in the projected profile of the particle, and $\pi$ is the circle constant, which is regarded as 3.14. As described above, in a case of a complete sphere, the coefficient of form unevenness FU is 1.00. However, regarding the secondary particles of the composite oxide included in the active material according to the first approach, the average value $FU_{ave}$ is from 0.80 to 1.00. In other words, the secondary particle having a coefficient of form unevenness FU that is 0.8 or more is determined to be "a spherical particle".

The 100 secondary particles are extracted as follows. Measurement is performed by SEM observation, observing an active material powder or an electrode piece including active material powder that is attached to a stage for an SEM with carbon tape. In a case of observing an electrode piece, the electrode piece is processed by Ar ion milling in a direction normal to the electrode, and the processed surface (sectional surface) is observed. The SEM observation is performed at random, and a total of 100 secondary particles in which a boundary line of an outer periphery (outline) of a secondary particle can be visually confirmed clearly are observed. The observation magnification is set to a magnification at which the boundary line of the outer periphery (outline) of a secondary particle can be visually confirmed clearly, for example, 5000 times to 20000 times magnification.

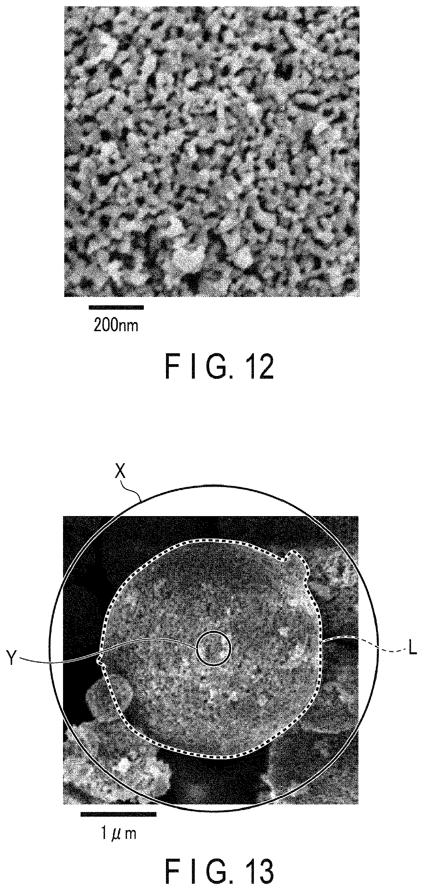

Next, the average value $FU_{ave}$ of the coefficient of form unevenness is calculated as follows. First, a centroid of each of the secondary particles is obtained from its projected area. A circle having a radius of a value of $D_{50}$ previously determined is defined as a circle X. A circle having a radius of a value obtained by multiplying 0.1 by the value of $D_{50}$ is defined as a circle Y. Explanation of measurement will be given below referring to Example 1 which is detailed later. FIG. 13 shows an SEM image of 10000 times magnification of an active material powder produced in Example 1. As shown in FIG. 13, at each observation point, in a case where the centers of the circle X and the circle Y are disposed on a centroid of a secondary particle, if an outer periphery L of the secondary particle is larger than the circle Y and smaller than the circle X, the secondary particle is determined to be a target of measurement.

With respect to the image of each of the 100 secondary particles thus determined, a length 1 of the outer periphery L of the target particle and a cross-sectional area a of the target particle are obtained using an image analysis tool. As the image analysis tool, for example, ImageJ disclosed in, for example, the document Dr. Michael et al. , Image Processing with ImageJ, Biophotonics International, the July 2004 issue can be used. For each of the 100 selected secondary particles, the coefficient of form unevenness FU is calculated according to formula 1 from the length 1 of the outer periphery and the cross-sectional area a obtained as described above. Furthermore, the average value $FU_{ave}$ of the calculated 100 coefficients of form unevenness FU is calculated.

In the case of an electrode piece, if a heavy load is applied in a process of rolling in electrode fabrication, the shape of the secondary particle may change. Accordingly, since the shape is deviated from an ideal sphere, the average value of the coefficients of form unevenness FU may be smaller than in a case of observation of powder. However, even in such a case, an electrode in which an average value of the coefficients of form unevenness FU is 0.8 or more means that a uniform electrically conductive path is ensured. Thus, the aforementioned effect can be obtained.

(Measurement of BET specific surface area)

The BET specific surface area for the active material particle can be obtained by the following method.

First, 4 g of the active material are collected as a sample. Next, the evaluation cell of a measuring apparatus is vacuum dried at a temperature of 100°C or more for 15 hours to perform degassing. As the evaluation cell, for example, a 1/2-inch cell, may be used. Next, the sample is placed in the measuring apparatus. As the measuring apparatus, for example, TriStar II 3020 available from Shimadzu-Micromeritics Instrument can be used. Then, in nitrogen gas at 77K (the boiling point of nitrogen), while gradually increasing a pressure P (mmHg) of the nitrogen gas, the nitrogen gas adsorption amount (mL/g) of the sample is measured for each pressure P. Next, a value obtained by dividing the pressure P (mmHg) by a saturated vapor pressure $P_0$ (mmHg) of the nitrogen gas is defined as a relative pressure $P/P_0$, and a nitrogen gas adsorption amount corresponding to each relative pressure $P/P_0$ is plotted, thereby obtaining an adsorption isotherm. A BET plot is calculated from the nitrogen adsorption isotherm and the BET equation, and the specific surface area is obtained using the BET plot. Note that a BET multipoint method is used to calculate the BET plot.

The active material according to the first approach includes spherical particles of a composite metal oxide that contains Mo element, Nb element, and at least one of the above described element M. The composite metal oxide has a non-periodic crystal structure. The spherical particles are secondary particles with an average particle size of primary particles of 10 nm to 300 nm and an average particle size of the secondary particles of 1 um to 10 $\mu$m. The capacity per volume and life performance of an electrode using the above composite oxide as an electrode active material is high. The capacity per volume and life performance of a secondary battery and battery pack using the above composite oxide as an electrode active material is high. Namely, the active material exhibit high capacity and long life.

(Second Approach)

According to a second approach, an electrode is provided.

The electrode according to the second approach includes the active material according to the first approach. This electrode may be a battery electrode including the active material according to the first approach as a battery active material. The electrode as the battery electrode may be, for example, a negative electrode including the active material according to the first approach as a negative electrode active material. Alternatively, the electrode may be a positive electrode including the active material according to the first approach as a positive electrode active material.

The electrode may include a current collector and an active material-containing layer. The active material-containing layer may be formed on both of reverse surfaces or one surface of the current collector. The active material-containing layer may contain the active material, and optionally an electro-conductive agent and a binder.

The active material-containing layer may contain the active material according to the first approach alone, or may contain two or more species of the active materials according to the first approach. Furthermore, the active material-containing layer may contain a mixture obtained by mixing one specie or two or more species of the active materials according to the first approach with one species or two or more species of other active materials. The contained proportion of the active material(s) according to the first approach with respect to the total mass of the active material(s) according to the first approach and the other active material(s) is desirably 10% by mass or more and 100% by mass or less.

For example, in a case where the active material according to the first approach is included as the negative electrode active material, examples of such other active materials include lithium titanate having a ramsdellite structure (e.g. , $Li_{2+x}Ti_3O_7$, $0 \leq x \leq 3$), lithium titanate having a spinel structure (e.g., $Li_{4+x}Ti_5O_{12}$, $0 \leq x \leq 3$), titanium dioxide ($TiO_2$), anatase titanium dioxide, rutile titanium dioxide, niobium pentoxide ($Nb_2O_5$), hollandite titanium composite oxide, orthorhombic titanium composite oxides, monoclinic niobium titanium oxides, niobium oxides, niobium titanium oxides, niobium molybdenum composite oxides, and niobium tungsten composite oxides.

Examples of the orthorhombic titanium-containing composite oxide include a compound represented by $Li_{2+e}M^I_{2-f}Ti_{6-g}M^{II}_hO_{14+\sigma}$. Here, $M^I$ is at least one selected from the group consisting of Sr, Ba, Ca, Mg, Na, Cs, Rb and K. $M^{II}$ is at least one selected from the group consisting of Zr, Sn, V, Nb, Ta, Mo, W, Y, Fe, Co, Cr, Mn, Ni and Al. The respective subscripts in the composition formula are specified as follows : $0 \leq e \leq 6$, $0 \leq f < 2$, $0 \leq g < 6$, $0 \leq h < 6$, and $-0.5 \leq \sigma \leq 0.5$. Specific examples of the orthorhombic titanium-containing composite oxide include $Li_{2+e}Na_2Ti_6O_{14}$ ($0 \leq e \leq 6$) .

Examples of the monoclinic niobium titanium oxide include a compound represented by $Li_xTi_{1-y}M1_yNb_{2-z}M2_zO_{7+\delta}$. Here, M1 is at least one selected from the group consisting of Zr, Si, and Sn. M2 is at least one selected from the group consisting of V, Ta, and Bi. The respective subscripts in the composition formula are specified as follows: $0 \leq x \leq 5$, $0 \leq y < 1$, $0 \leq z < 2$, and $-0.3 \leq \delta \leq 0.3$. Specific examples of the monoclinic niobium titanium composite oxide include $Li_xNb_2TiO_7$ ($0 \leq x \leq 5$).

Another example of the monoclinic niobium titanium oxide is a compound represented by $Li_xTi_{1-y}M3_{y+z}Nb_{2-z}O_{7-\delta}$. Here, M3 is at least one selected from the group consisting of Mg, Fe, Ni, Co, W, Ta, and Mo. The respective subscripts in the composition formula are specified as follows: $0 \leq x < 5$, $0 \leq y < 1$, $0 \leq z < 2$, and $-0.3 \leq \delta \leq 0.3$.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle. In addition, the current collecting performance of the active material-containing layer may be improved by coating carbon or an electro-conductive material onto the active material surface together with using the electro-conductive agent(s) .

The binder is added to fill gaps among the dispersed active material and also to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or alternatively, two or more may be used in combination as the binder.

The blending proportions of active material, electro-conductive agent and binder in the active material-containing layer may be appropriately changed according to the use of the electrode. For example, in the case of using the electrode as a negative electrode of a secondary battery, the active material (negative electrode active material), electro-conductive agent and binder are preferably blended in proportions of 68% by mass to 96% by mass, 2% by mass to 30% by mass, and 2% by mass to 30% by mass, respectively. When the amount of electro-conductive agent is 2% by mass or more, the current collection performance of the active material-containing layer can be improved. When the amount of binder is 2% by mass or more, binding between the active material-containing layer and current collector is sufficient, whereby excellent cycling performances can be expected. On the other hand, an amount of each of the electro-conductive agent and binder is preferably 30% by mass or less, in view of increasing the capacity.

In the case where the active material surface is covered with carbon or an electro-conductive material, the amount of covering material may be assumed to be included in the amount of electro-conductive agent. The amount of coverage by the carbon or electro-conductive material is preferably 0.5% by mass or more and 5% by mass or less. With a coverage amount within this range, the current-collecting performance and electrode density can be made high.

There may be used for the current collector, a material which is electrochemically stable at the potential (vs. $Li/Li^+$) at which lithium (Li) is inserted into and extracted from the active material. For example in the case where the active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 $\mu$m to 20 $\mu$m. The current collector having such a thickness can maintain balance between the strength and weight reduction of the electrode.

The current collector may include a portion where the active material-containing layer is not formed on a surface thereof. This portion may serve as a current collecting tab.

The electrode may be fabricated by the following method, for example. First, active material, electro-conductive agent, and binder are suspended in a solvent to prepare a slurry. The slurry is applied onto one surface or both of reverse surfaces of a current collector. Next, the applied slurry is dried so as to obtain a stack of active material-containing layer and current collector. Then, the stack is subjected to pressing. The electrode can be fabricated in this manner.

Alternatively, the electrode may also be fabricated by the following method. First, active material, electro-conductive agent, and binder are mixed to obtain a mixture. Next, the mixture is formed into pellets. Then the electrode can be obtained by arranging the pellets onto the current collector.

The electrode according to the second approach includes the active material according to the first approach. Thus, the electrode according to the second approach can realize a secondary battery with high capacity per volume and life performance.

(Third Approach)

According to a third approach, there is provided a secondary battery including a negative electrode, a positive electrode, and an electrolyte. As the negative electrode or positive electrode, the secondary battery includes the electrode according to the second approach. That is, the secondary battery according to the third approach includes as a battery electrode, an electrode that includes the active material according to the first approach as a battery active material. A secondary battery of a desirable aspect includes the electrode according to the second approach as the negative electrode. That is, the secondary battery of a desirable aspect includes as the negative electrode, an electrode that includes the active material according to the first approach as a battery active material. Hereinafter, the desirable aspect is described.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery according to the third approach may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

1) Negative Electrode

The negative electrode may include a negative electrode current collector and a negative electrode active material-containing layer. The negative electrode current collector and the negative electrode active material-containing layer may respectively be the current collector and active material-containing layer that may be included in the electrode according to the second approach. The negative electrode active material-containing layer contains the active material according to the first approach as negative electrode active material.

Of the details of the negative electrode, portions that overlap with the details described in the second approach are omitted.

The density of the negative electrode active material-containing layer (excluding the current collector) is preferably from 1.8 g/cm$^3$ to 2.8 g/cm$^3$. The negative electrode having the density of the negative electrode active material-containing layer within this range is excellent in energy density and ability of holding the electrolyte. The density of the negative electrode active material-containing layer is more preferably from 2.1 g/cm$^3$ to 2.6 g/cm$^3$.

The negative electrode may, for example, be fabricated by the same method as that for the electrode according to the second approach.

2) Positive Electrode

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide ($MnO_2$), iron oxides, copper oxides, nickel oxides, lithium manganese composite oxides (e.g., $Li_xMn_2O_4$ or $Li_xMnO_2$; $0 < x \le 1$), lithium nickel composite oxides (e.g., $Li_xNiO_2$; $0 < x \le 1$), lithium cobalt composite oxides (e.g., $Li_xCoO_2$; $0 < x \le 1$), lithium nickel cobalt composite oxides (e.g., $Li_xNi_{1-y}Co_yO_2$; $0 < x \le 1$, $0 < y < 1$), lithium manganese cobalt composite oxides (e.g., $Li_xMn_yCo_{1-y}O_2$; $0 < x \le 1$, $0 < y < 1$), lithium manganese nickel composite oxides having a spinel structure (e.g., $Li_xMn_{2-y}Ni_yO_4$; $0 < x \le 1$, $0 < y < 2$), lithium phosphates having an olivine structure (e.g., $Li_xFePO_4$; $0 < x \le 1$, $Li_xFe_{1-y}Mn_yPO_4$; $0 < x \le 1$, $0 < y \le 1$, and $Li_xCoPO_4$; $0 < x \le 1$), iron sulfate ($Fe_2(SO_4)_3$), vanadium oxides (e.g., $V_2O_5$), and lithium nickel cobalt manganese composite oxide ($Li_xNi_{1-y-z}Co_yMn_zO_2$; $0 < x \le 1$, $0 < y < 1$, $0 < z < 1$, $y + z < 1$).

Among the above, examples of compounds more preferable as the positive electrode active material include lithium manganese composite oxides having a spinel structure (e.g., $Li_xMn_2O_4$; $0 < x \le 1$), lithium nickel composite oxides (e.g., $Li_xNiO_2$; $0 < x \le 1$), lithium cobalt composite oxides (e.g., $Li_xCoO_2$; $0 < x \le 1$), lithium nickel cobalt composite oxides (e.g., $Li_xNi_{1-y}Co_yO_2$; $0 < x \le 1$, $0 < y < 1$), lithium manganese nickel composite oxides having a spinel structure (e.g., $Li_xMn_{2-y}Ni_yO_4$; $0 < x \le 1$, $0 < y < 2$), lithium manganese cobalt composite oxide (e.g., $Li_xMn_yCo_{1-y}O_2$; $0 < x \le 1$, $0 < y < 1$), lithium iron phosphates (e.g., $Li_xFePO_4$; $0 < x \le 1$), and lithium nickel cobalt manganese composite oxides ($Li_xNi_{1-y-z}Co_yMn_zO_2$; $0 < x \le 1$, $0 < y < 1$, $0 < z < 1$, $y + z < 1$). The positive electrode potential can be made high by using these positive electrode active materials.

When an ambient temperature molten salt is used as the electrolyte of the battery, it is preferable to use a positive electrode active material including lithium iron phosphate, $Li_xVPO_4F$ ($0 \le x \le 1$), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 $\mu$m. The positive electrode active material having a primary particle size of 100 nm or more is easy to handle during industrial production. In the positive electrode active material having a primary particle size of 1 $\mu$m or less, in-solid diffusion of lithium ions can proceed smoothly.

The specific surface area of the positive electrode active material is preferably from 0.1 m$^2$/g to 10 m$^2$/g. With the positive electrode active material having a specific surface area of 0.1 m$^2$/g or more, sufficient sites for inserting and extracting Li ions can be secured. The positive electrode active material having a specific surface area of 10 m$^2$/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF) , carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 $\mu$m to 20 $\mu$m, and more preferably 15 $\mu$m or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be fabricated by a method similar to that for the electrode according to the second approach, for example, using a positive electrode active material.

3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), lithium bistrifluoromethylsulfonylimide ($LiN(CF_3SO_2)_2$), and lithium bis(fluorosulfonyl)imide ($LiN(SO_2F)_2$; LiFSI), and mixtures thereof. The electrolyte salt is preferably resistant to oxidation even at a high potential, and most preferably $LiPF_6$.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); $\gamma$-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25 °C) . The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of $1 \times 10^{-6}$ S/cm or more at 25 °C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula $Li_{1+x}M\alpha_2(PO_4)_3$. $M\alpha$ in the above general formula is, for example, one or more selected from the group consisting of titanium (Ti), germanium (Ge), strontium (Sr), zirconium (Zr), tin (Sn), aluminum (Al), and calcium (Ca). The subscript x is within the range of $0 \leq x \leq 2$.

Specific examples of the lithium phosphate solid electrolyte having the NASICON structure include a LATP compound represented by $Li_{1+x}Al_xTi_{2-x}(PO_4)_3$ where $0.1 \leq x \leq 0.5$; a compound represented by $Li_{1+x}Al_yM\beta_{2-y}(PO_4)_3$ where $M\beta$ is one or more selected from the group consisting of Ti, Ge, Sr, Zr, Sn, and Ca, $0 \leq x \leq 1$, and $0 \leq y \leq 1$; a compound represented by $Li_{1+x}Al_xGe_{2-x}(PO_4)_3$ where $0 \leq x \leq 2$; a compound represented by $Li_{1+x}Al_xZr_{2-x}(PO_4)_3$ where $0 \leq x \leq 2$; a compound represented by $Li_{1+x+y}Al_xM\gamma_{2-x}Si_yP_{3-y}O_{12}$ where $M\gamma$ is one or more selected from the group consisting of Ti and Ge, $0 < x \leq 2$, and $0 \leq y < 3$; and a compound represented by $Li_{1+2x}Zr_{1-x}Ca_x(PO_4)_3$ where $0 \leq x < 1$.

In addition to the above lithium phosphate solid electrolyte, examples of the oxide solid electrolyte include amorphous LIPON compounds represented by $Li_xPO_yN_z$ where $2.6 \leq x \leq 3.5$, $1.9 \leq y \leq 3.8$, and $0.1 \leq z \leq 1.3$ (e.g., $Li_{2.9}PO_{3.3}N_{0.46}$); a compound having a garnet structure represented by $La_{5+x}A_xLa_{3-x}M\delta_2O_{12}$ where A is one or more selected from the group consisting of Ca, Sr, and Ba, $M\delta$ is one or more selected from the group consisting of Nb and Ta, and $0 \leq x \leq 0.5$; a compound represented by $Li_3M\delta_{2-x}L_2O_{12}$ where $M\delta$ is one or more selected from the group consisting of Nb and Ta, L may include Zr, and $0 \leq x \leq 0.5$; a compound represented by $Li_{7-3x}Al_xLa_3Zr_3O_{12}$ where $0 \leq x \leq 0.5$; a LLZ compound represented by $Li_{5+x}La_3M\delta_{2-x}Zr_xO_{12}$ where $M\delta$ is one or more selected from the group consisting of Nb and Ta, and $0 \leq x \leq 2$ (e.g., $Li_7La_3Zr_2O_{12}$); and a compound having a perovskite structure and represented by $La_{2/3-x}Li_xTiO_3$ where $0.3 \leq x \leq 0.7$.

One or more among the above compounds may be used as the solid electrolyte. Two or more of the above solid electrolytes may be used, as well.

Alternatively, in place of the nonaqueous electrolyte, a liquid aqueous electrolyte or gel aqueous electrolyte may be used as the electrolyte. The liquid aqueous electrolyte is prepared by dissolving, for example, the above electrolyte salt(s) as solute in an aqueous solvent. The gel aqueous electrolyte is prepared by obtaining a composite of a liquid aqueous electrolyte and the above polymeric material (s) . As the aqueous solvent, a solution including water may be used. The solution including water may be pure water, or may be a mixed solution of water with organic solvent(s).

4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 1% by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

6) Negative Electrode Terminal

The negative electrode terminal may be made of a material that is electrochemically stable at the Li insertion-extraction potential of the negative electrode active materials mentioned above, and having electrical conductivity.

Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

7) Positive Electrode Terminal

The positive electrode terminal may be made of, for example, a material that is electrically stable in the potential range of 3 V to 4.5 V (vs. Li/Li$^+$) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

In the above, the aspect including the electrode according to the second approach as the negative electrode has been explained. Of the aspects of the secondary battery according to the third approach, in an aspect including the electrode according to the second approach as the positive electrode, as the negative electrode that is the counter electrode thereto, for example, a counter electrode like the following may be used. At least one electrode selected from lithium metal, lithium metal alloy, graphite, silicon, silicon oxide, tin oxide, tin, and other alloys may be used as the negative electrode. For materials not including lithium within the active material, pre-doping of Li element may be performed, so as to be made useable as negative electrodes.

In the aspect including the electrode according to the second approach as the positive electrode, details of such a positive electrode overlaps with those explained in the second approach, and are therefore omitted.

Next, the secondary battery according to the third approach will be more concretely described with reference to the drawings.

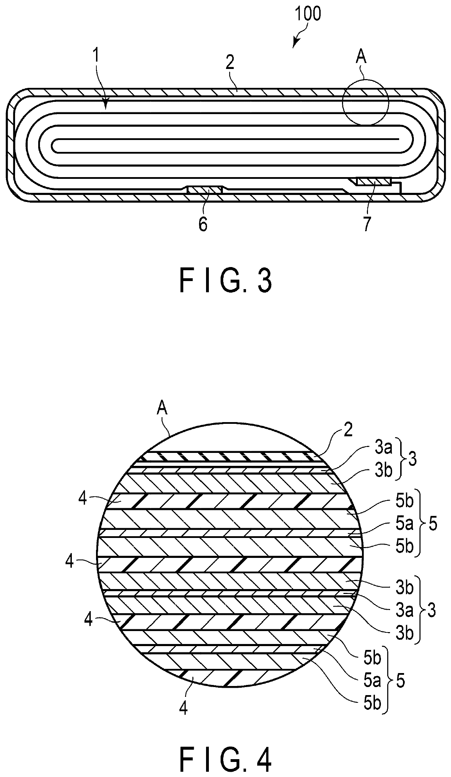

FIG. 3 is a cross-sectional view schematically showing an example of the secondary battery. FIG. 4 is an enlarged cross-sectional view of section A of the secondary battery shown in FIG. 3.

The secondary battery 100 shown in FIGS. 3 and 4 includes an electrode group 1 shown in FIG. 3, a bag-shaped container member 2 shown in FIGS. 3 and 4, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 3, the electrode group 1 is a wound electrode group in a flat form. The wound electrode group 1 in a flat form includes a negative electrode 3, a separator 4, and a positive electrode 5, as shown in FIG. 4. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 4. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces thereof.

As shown in FIG. 3, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

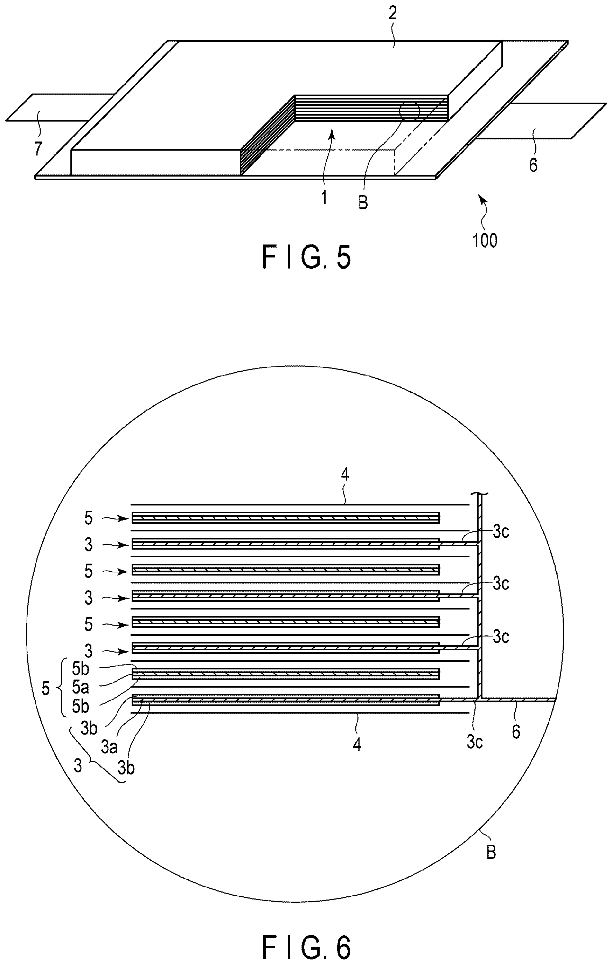

The secondary battery according to the approach is not limited to the secondary battery of the structure shown in FIGS. 3 and 4, and may be, for example, a battery of a structure as shown in FIGS. 5 and 6.

FIG. 5 is a partially cut-out perspective view schematically showing another example of the secondary battery. FIG. 6 is an enlarged cross-sectional view of section B of the secondary battery shown in FIG. 5.

The secondary battery 100 shown in FIGS. 5 and 6 includes an electrode group 1 shown in FIGS. 5 and 6, a container member 2 shown in FIG. 5, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 6, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 6, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the third approach includes the electrode according to the second approach. Thus, the secondary battery according to the third approach includes an electrode including the active material according to the first approach. Therefore, the secondary battery according to the third approach has high capacity per volume and life performance.

(Fourth Approach)

According to a fourth approach, a battery module is provided. The battery module includes plural of secondary batteries according to the third approach.

In the battery module, each of the single-batteries may be arranged to be electrically connected in series or in parallel, or may be arranged in combination of in-series connection and in-parallel connection.

An example of the battery module according to the fourth approach will be described next, with reference to the drawings.

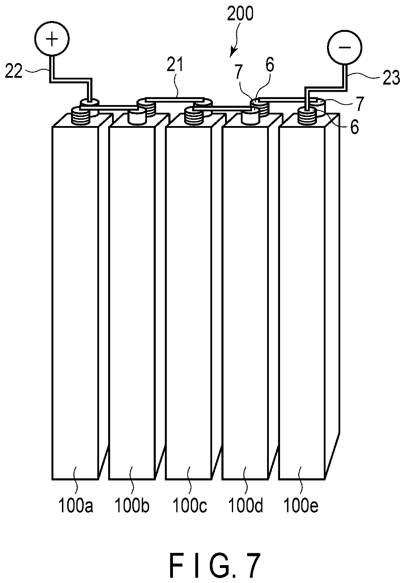

FIG. 7 is a perspective view schematically showing an example of the battery module. The battery module 200 shown in FIG. 7 includes five single-batteries 100a to 100e, four bus bars 21, a positive electrode-side lead 22, and a negative electrode-side lead 23. Each of the five single-batteries 100a to 100e is the secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 7 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the fourth approach includes the secondary battery according to the third approach. Therefore, the battery module has high capacity per volume and life performance.

(Fifth Approach)

According to a fifth approach, a battery pack is provided. The battery pack includes a battery module according to the fourth approach. The battery pack may include a single secondary battery according to the third approach, in place of the battery module according to the fourth approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

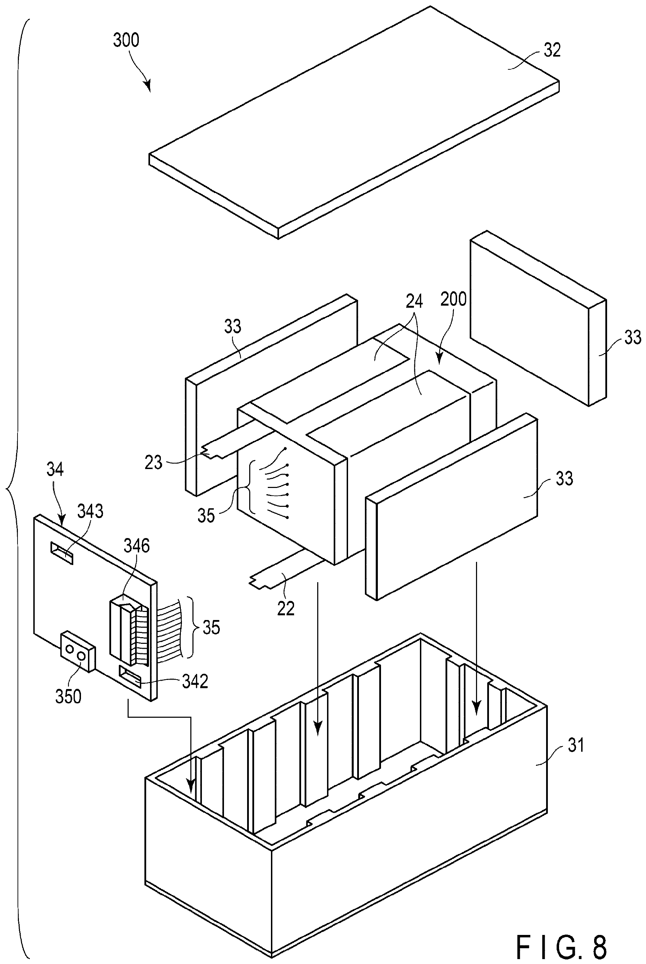

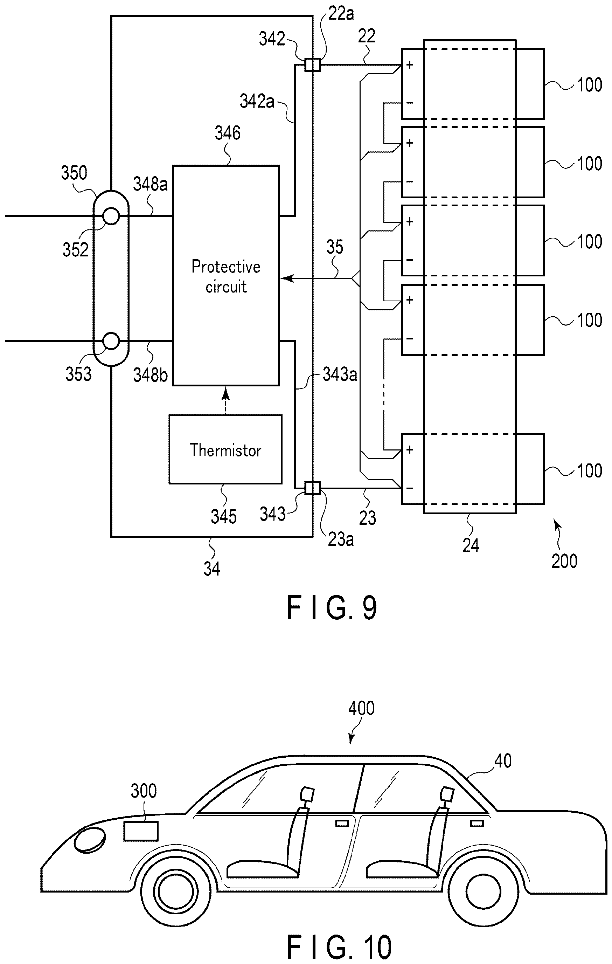

FIG. 8 is an exploded perspective view schematically showing an example of the battery pack. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wires 35, and an insulating plate (not shown).

The housing container 31 shown in FIG. 8 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the third approach. The plural single-batteries 100 are electrically connected in series, as shown in FIG. 9. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode (s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34 . The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device (s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fifth approach is provided with the secondary battery according to the third approach or the battery module according to the fourth approach. Accordingly, the battery pack has high capacity per volume and life performance.

(Sixth Approach)

According to a sixth approach, a vehicle is provided. The battery pack according to the fifth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 10 is a partially see-through diagram schematically showing an example of the vehicle.

A vehicle 400, shown in FIG. 10 includes a vehicle body 40 and a battery pack 300 according to the fifth approach. In the example shown in FIG. 10, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 10, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

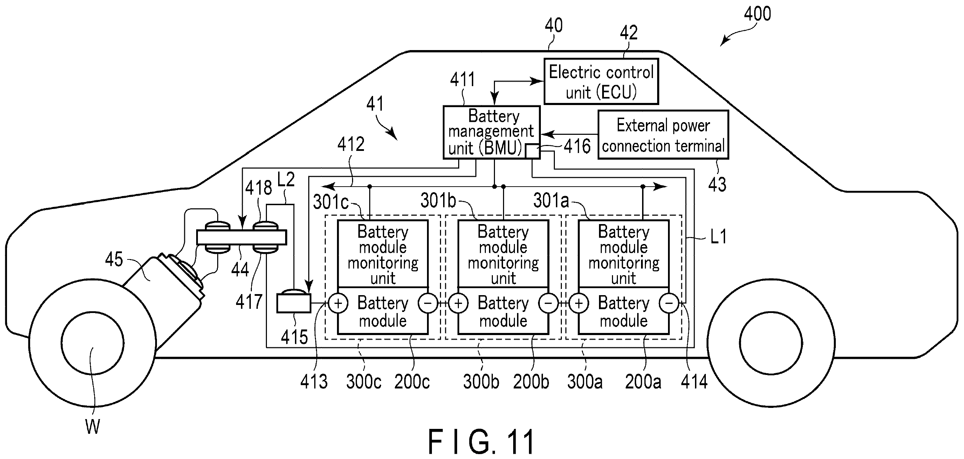

Next, with reference to FIG. 11, an aspect of operation of the vehicle according to the approach is explained.

FIG. 11 is a diagram schematically showing an example of a control system related to an electric system in the vehicle. A vehicle 400, shown in FIG. 11, is an electric automobile.

The vehicle 400, shown in FIG. 11, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 11, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the third approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c) . The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 11) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the sixth approach is installed with the battery pack according to the fifth approach. Since the capacity per volume of the battery pack is high, the degree of liberty in designing the vehicle is high. Thus, various vehicles can be provided without hindering the performance of the vehicle. Moreover, by virtue of the life performance of the battery pack being high, a vehicle of high reliability can be provided.

Examples

Hereinafter, the approaches will be described in more detail based on Examples. It should be noted, however, that the present invention is not limited to the Examples described below.

<Synthesis>

(Example 1)

A titanium-niobium-molybdenum composite oxide was synthesized as described below.

As starting materials, niobium ammonium oxalate, ammonium molybdate, and titanium tetraisopropoxide were prepared. These starting materials were weighed out at a predetermined composition ratio. Niobium ammonium oxalate and ammonium molybdate were dissolved in pure water to thereby prepare solution A. Next, titanium tetraisopropoxide was put into an aqueous solution of oxalic acid of 1M concentration and was dissolved therein by heating and stirring, to thereby prepare solution B. After the solutions A and B were mixed, an ammonia solution was added while heating and stirring to adjust the pH to 7, whereby a sol was obtained. The sol liquid was subjected to spray drying at a drying temperature of 160°C to thereby evaporate the solvent, whereby white precursor powder was obtained. The precursor powder was put into an alumina crucible, and then firing was performed in the atmosphere at 600°C for four hours (first firing) to thereby form indefinite-shaped particles made of a titanium-niobium-molybdenum composite oxide phase. Thereafter, coarse particles were pulverized by dry ball milling, and then dissolved in water as a solvent, whereby a slurry containing a solid content ratio at a mass ratio of 6 was prepared A dispersant including polyvinyl alcohol was added to the slurry at an active material mass ratio of 0.5. The slurry prepared in the manner described above was subjected to wet bead milling to perform slurry dispersion. In the wet bead milling, the media material was zirconia and the media diameter was 0.2 mm. After the wet bead milling, the slurry was subjected to spray drying at a drying temperature of 140°C to thereby evaporate the solvent, whereby a powder formed of spherical particles was collected. Then, the powder was put into an alumina crucible, and then firing was performed again in the atmosphere at 600°C for four hours (second firing) . Through the above procedure, an active material powder was obtained.

(Examples 2 to 4)

Active material particles were synthesized by the same method as in Example 1, except that the compounding ratio of the starting materials was changed.

(Example 5)

Active material particles were synthesized by the same method as in Example 1, except that the temperature of firing the precursor was changed to 700°C in the first firing and the temperature of firing the precursor was changed to 650°C in the second firing.

(Example 6)

Active material particles were synthesized by the same method as in Example 1, except that the temperature of firing the precursor was changed to 800°C in the first firing and the temperature of firing the precursor was changed to 650°C in the second firing.

(Examples 7 and 8)

In the spray drying process after the wet bead milling, the secondary particle size was controlled by changing the solid content ratio and the total fluid volume. Except this point, active material particles were synthesized by the same method as in Example 1.

(Comparative Example 1)

A titanium-niobium-molybdenum composite oxide was synthesized as described below.
As starting materials, niobium ammonium oxalate, ammonium molybdate, and titanium tetraisopropoxide were prepared. These starting materials were weighed out at a predetermined composition ratio. Niobium ammonium oxalate and ammonium molybdate were dissolved in pure water to thereby prepare solution A. Next, titanium tetraisopropoxide was put into an aqueous solution of oxalic acid of 1M concentration and was dissolved therein by heating and stirring, to thereby prepare solution B. After the solutions A and B were mixed, an ammonia solution was added while heating and stirring to adjust the pH to 7, whereby a sol was obtained. The sol liquid was subjected to spray drying at a drying temperature of 160°C to thereby evaporate the solvent, whereby white precursor powder was obtained. The precursor powder was put into an alumina crucible, and then firing was performed at 600°C for four hours. In the above manner, an active material powder was obtained.

(Comparative Example 2)

A titanium-niobium composite oxide was synthesized as described below.
As starting materials, niobium ammonium oxalate and titanium tetraisopropoxide were prepared. These starting materials were weighed out at a predetermined composition ratio. Niobium ammonium oxalate was dissolved in pure water to thereby prepare solution A. Next, titanium tetraisopropoxide was put into an aqueous solution of oxalic acid of 1M concentration and was dissolved therein by heating and stirring, to thereby prepare solution B. After the solutions A and B were mixed, an ammonia solution was added while heating and stirring to adjust the pH to 7, whereby a sol was obtained. The sol liquid was subjected to spray drying at a drying temperature of 160°C to thereby evaporate the solvent, whereby white precursor powder was obtained. The precursor powder was put into an alumina crucible, and then firing was performed in the atmosphere at 1000°C for four hours to thereby form indefinite-shaped particles made of a titanium-niobium composite oxide phase. Thereafter, coarse particles were pulverized by dry ball milling, and then dissolved in water as a solvent, whereby a slurry containing a solid content ratio at a mass ratio of 6 was prepared A dispersant including polyvinyl alcohol was added to the slurry at an active material mass ratio of 0.5. The slurry prepared in the manner described above was subjected to wet bead milling to perform slurry dispersion. In the wet bead milling, the media material was zirconia and the media diameter was 0.2 mm. After the wet bead milling, the slurry was subjected to spray drying at a drying temperature of 140°C to thereby evaporate the solvent, whereby powder of spherical particles was collected. Then, the powder was put into an alumina crucible, firing was performed again in the atmosphere at 700°C for four hours. Through the above procedure, an active material powder was obtained.

<Measurement>

The powders obtained respectively in the above Examples and Comparative Example were subjected to scanning transmission electron microscope observation. Specifically, the fine structure was observed using a 10 nm $\times$ 10 nm image through the STEM-HAADF image having the spherical aberration correction function, as described in detail earlier. Furthermore, the measurement through wide-angle X-ray scattering method was performed. The measurement was performed according to the details described above. Based on the obtained spectra, an analysis of the crystal structures was performed according to the Rietveld method. Furthermore, the ICP emission analysis, BET specific surface area measurement by the $N_2$ gas adsorption method, particle diameter distribution measurement, and scanning electron microscope observation were performed.

For the composite metal oxide obtained in Example 1 and Comparative Example 1, as a result of observing the fine structure through the STEM-HAADF image, confirmed was the crystal structure in which the $ReO_3$ blocks had different sizes in the field of view and were connected via sharing the edges of the octahedra without periodicity. Therefore, the crystal structure was identified as the crystal structure of FIG. 1. As a result of measurement by ICP emission analysis, the composition of metal elements was determined to be Ti:Nb:Mo = 0.33:1.00:0.33.

Also regarding the composite oxides obtained in Examples 2 to 4, 7, and 8, confirmed was a crystal structure in which blocks are connected via the octahedral edge sharing without periodicity in the same manner as in Example 1. Therefore, the crystal structures were identified as the crystal structure shown in FIG. 1. With regard to the composite oxides obtained in Examples 5 and 6, it was confirmed that a non-periodic structure as shown in FIG. 1 and a tetragonal crystal structure as shown in FIG. 2 coexisted.

With regard to the composite oxide obtained in Comparative Example 2, based on XRD patterns and Rietveld analyses thereof, a crystal structure of monoclinic niobium titanium oxide $TiNb_2O_7$ was confirmed. Specifically, confirmed was a crystal structure whose space group notation is assigned to C2/m (space group No. 12), having $3 \times 3 = 9$ rhenium oxide-type block structures not including a structure sharing vertices with tetrahedra, and in which a ratio of the number of oxygen to the number of metal elements per unit lattice is $A_O/A_M$ = 2.33. When such a crystal structure was estimated, an analysis as a single phase was possible. As a result of measurement by ICP emission spectrometry, the composition of metal elements was determined to be Ti:Nb = 0.50:1.00

With regard to the composite metal oxide powder obtained in Example 1, an average particle size calculated by the particle size distribution measurement was 2.43 $\mu$m. FIG. 12 shows an example of an SEM image of a primary particle at 50000 times magnification. The average value of the primary particle sizes was 0.05 um. In accordance with the method described above concerning the first approach with reference to FIG. 13, the secondary particles were observed through observation of the SEM image at 10000 times magnification. As shown in FIG. 13, it was confirmed that a secondary particle had formed into a spherical shape. Using image software Imaged, the particle shape was determined as shown in FIG. 13, a cross-sectional area and a circumferential length were calculated, and a coefficient of form unevenness was calculated in the manner described above in detail, yielding 0.92. The same operation was performed for 100 particles, and an average value $FU_{ave}$ of the coefficients of form unevenness was determined to be 0.86.

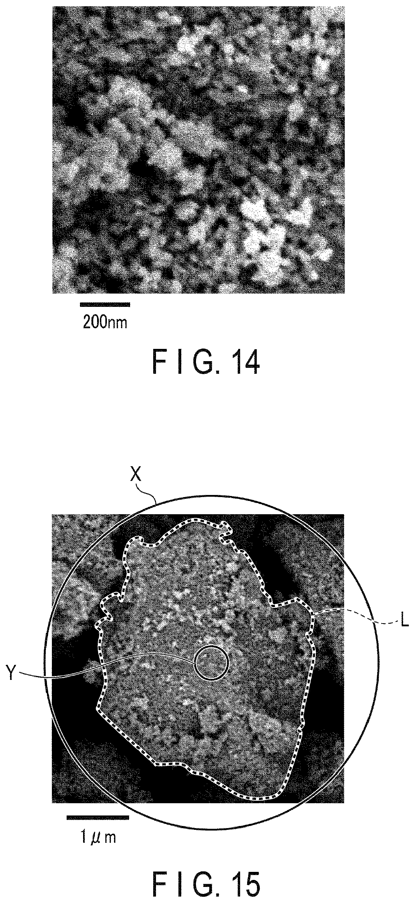

With regard to the composite metal oxide powder obtained in Comparative Example 1, an average particle size calculated by particle size distribution measurement was 2.67 $\mu$m. FIG. 14 shows an example of an SEM image at 50000 times magnification of a primary particle . The average value of the primary particle sizes was 0.05 um. In accordance with the method similar to that described above concerning the first approach with reference to FIG. 13, the secondary particles were observed through observation of the SEM image at 10000 times magnification. An example is shown in FIG. 15. It can be seen that a secondary particle is formed of primary particles aggregated in an indefinite shape. Using image software Imaged, the particle shape was determined as shown in FIG. 15, a cross-sectional area and a circumferential length were calculated, and a coefficient of form unevenness was calculated in the manner described above in detail, yielding 0.63. The same operation was performed for 100 particles, and an average value $FU_{ave}$ of the coefficients of form unevenness was determined to be 0.65.

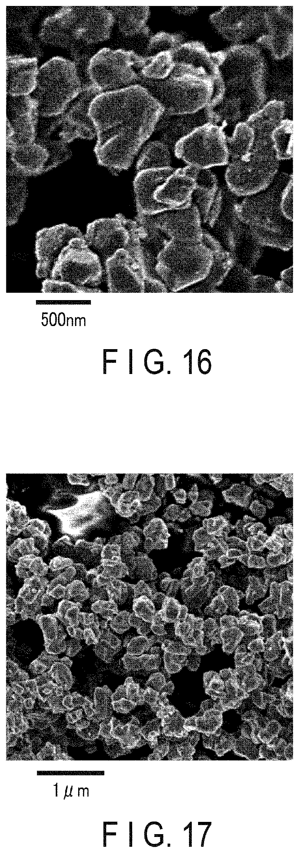

With regard to the composite metal oxide powder obtained in Comparative Example 2, an average particle size calculated by particle size distribution measurement was 1.00 um. FIG. 16 shows an example of an SEM image at 20000 times magnification of a primary particle. The average value of the primary particle sizes was 0.05 $\mu$m. In accordance with the method described above concerning the first approach, particles were observed through observation of the SEM image at 10000 times magnification. An example is shown in FIG. 17. Although the particles appeared as though they were bonded to an adjacent particle via necking or aggregation, a secondary particle formed of a plurality of particles was not observed in Comparative Example 2. Thus, determination of a secondary particle was difficult. Therefore, a coefficient of form unevenness was not calculated.

Measurement results for composite metal oxide powders obtained by Examples 2 to 8 will be indicated later in Table 2 .

<Evaluation of Battery Performance>

The active material powders respectively obtained in the above Examples and the Comparative Example were used to produce electrodes, as described below.

First, 100 parts by mass of active material, 6 parts by mass of electro-conductive agent, and 4 parts by mass of binder were dispersed in a solvent to prepare a slurry. Each of the composite material powders obtained by the above method was used as the active material. A mixture of acetylene black and carbon nanotube as well as graphite was used as the electro-conductive agent. A mixture of carboxymethyl cellulose (CMC) and styrene-butadiene rubber (SBR) was used as the binder. Pure water was used as the solvent.

Then, the obtained slurry was applied onto one surface of a current collector and the coating was dried, to form an active material-containing layer. An aluminum foil having a thickness of 12 um was used as the current collector. Subsequently, the current collector and the active material-containing layer were pressed. An electrode was thus obtained. The mass per unit area of the electrode was 60 g/m$^2$.

A nonaqueous electrolyte was prepared as follows. An electrolyte salt was dissolved in an organic solvent to obtain a liquid nonaqueous electrolyte. LiPF$_6$ was used as the electrolyte salt. The molar concentration of LiPF$_6$ in the nonaqueous electrolyte was 1 mol/L. A mixed solvent of ethylene carbonate (EC) and diethyl carbonate (DEC) was used as the organic solvent. A volume ratio of EC and DEC was 1 : 2.

Three-electrode beaker cells were produced using the electrode obtained by the above-described method as a working electrode, using a metal lithium foil as a counter electrode and a reference electrode, and using the nonaqueous electrolyte prepared by the above-described method.

Initial charge-discharge performance and cycle life performance of the produced cells were evaluated. Specifically, charging and discharging were performed at an evaluation temperature of 25°C in a potential range from a lower limit potential of 0.4 V (vs. Li/Li$^+$) to an upper limit potential of 3.2 V (vs. Li/Li$^+$) with reference to a lithium reference potential. The charging was performed in a constant current-constant voltage mode and the discharging was performed in a constant current mode. The current value of the initial charge-discharge was set to 0.2 C. The capacity upon discharge was measured to obtain an initial discharge capacity. After examining the initial discharge capacity, cycle life was evaluated. Charge and discharge cycles at a current value of 1 C were repeated, and a retention ratio of the discharge capacity at the 30th cycle to the discharge capacity at the first cycle (the cycle capacity retention ratio (%) = [discharge capacity at 30th cycle / discharge capacity at first cycle] × 100%) was calculated and evaluated. The calculated values are indicated in Table 2 below.

Table 1 below indicates temperature conditions in the first firing and the second firing in the process of firing a precursor when synthesizing a composite metal oxide, the composition of the obtained composite metal oxide, and the crystal structure included in the obtained composite metal oxide. As the composition of a composite oxide, a stoichiometric ratio of the element M, the Nb element, and the Mo element is indicated. Table 2 indicates an average secondary particle size and average primary particle size obtained by the particle size distribution measurement and SEM observation, BET specific surface area, an average value FU$_{ave}$ of coefficients of form unevenness, and an initial discharge capacity and cycle capacity retention ratio obtained by the battery performance evaluation described above.

[Table 1]

| | First firing temperature | Secondfiring temperature | Composition of composite metal oxide | Crystal structure |
|---|---|---|---|---|
| Example 1 | 600°C | 600°C | Ti:Nb:Mo = 0.33:1.00: 0.33 | Non-periodic structure |
| Example 2 | 600°C | 600°C | Ti:Nb:Mo = 0.23:1.00: 0.23 | Non-periodic structure |
| Example 3 | 600°C | 600°C | Ti:Nb:Mo = 0.50:1.00: 0.50 | Non-periodic structure |
| Example 4 | 600°C | 600°C | Ti:Nb:Mo = 0.96:1.00: 0.23 | Non-periodic structure |
| Example 5 | 700°C | 650°C | Ti:Nb:Mo = 0.23:1.00: 0.18 | Coexistence of non-periodic structure and tetragonal crystal structure |
| Example 6 | 800°C | 650°C | Ti:Nb:Mo = 0.23:1.00: 0.18 | Coexistence of non-periodic structure and tetragonal crystal structure |
| Example 7 | 600°C | 600°C | Ti:Nb:Mo = 0.33:1.00: 0.33 | Non-periodic structure |
| Example 8 | 600°C | 600°C | Ti:Nb:Mo = 0.33:1.00: 0.33 | Non-periodic structure |

(continued)

|  | First firing temperature | Second firing temperature | Composition of composite metal oxide | Crystal structure |
|---|---|---|---|---|
| Comparative Example 1 | 600°C | 600°C | Ti:Nb:Mo = 0.33:1.00: 0.33 | Non-periodic structure |
| Comparative Example 2 | 600°C | 600°C | Ti:Nb = 0.50:1.00 | Monoclinic structure |

[Table 2]

|  | Average secondary particle size ($\mu$m) | Average primary particle size ($\mu$m) | BET specific surface area (m$^2$/g) | Average coefficient of form unevenness $FU_{ave}$ | Initial discharge capacity (mAh/g) | Cycle capacity retention ratio (%) |
|---|---|---|---|---|---|---|
| Example 1 | 2.43 | 0.05 | 21.8 | 0.86 | 398 | 75 |
| Example 2 | 2.37 | 0.03 | 30.1 | 0.85 | 397 | 70 |
| Example 3 | 2.55 | 0.08 | 19.3 | 0.82 | 400 | 76 |
| Example 4 | 4.46 | 0.12 | 16.4 | 0.81 | 380 | 72 |
| Example 5 | 2.41 | 0.14 | 10.6 | 0.83 | 370 | 78 |
| Example 6 | 1.92 | 0.18 | 8.8 | 0.81 | 341 | 78 |
| Example 7 | 6.78 | 0.05 | 21.8 | 0.85 | 398 | 75 |
| Example 8 | 9.61 | 0.05 | 21.8 | 0.84 | 398 | 70 |
| Comparative Example 1 | 2.67 | 0.05 | 30.1 | 0.65 | 396 | 60 |
| Comparative Example 2 | 1.00 | 0.53 | 4.0 | - | 298 | 80 |

As indicated in Table 1, in Examples 1 to 8, the creystal structure of the composite metal oxide includes a non-periodic crystal structure like that shown in FIG. 1. Furthermore, as is evident from Table 2, showing that the average coefficient of form unevenness $FU_{ave}$ was 0.8 or more, a spherical particle was obtained. In the batteries using the active materials obtained by Examples 1 to 8, the initial discharge capacity was high and the cycle capacity retention ratio was satisfactory as shown in Table 2.

In contrast, in Comparative Example 1, although a non-periodic crystal structure was obtained, a spherical particle was not obtained. The average coefficient of form unevenness $FU_{ave}$ of the secondary particles in Comparative Example 1, in which a spherical particle was not formed, was less than 0.8 as described above. In the batteries using the active material obtained by Comparative Example 1, although the initial discharge capacity was high due to the non-periodic crystal structure as indicated in Table 1, the cycle capacity retention ratio was lower than those of Examples 1 to 8.

In Comparative Example 2, a non-periodic crystal structure was not obtained as indicated in Table 1, and a distinct secondary particle was not observed as shown in FIG. 17. In the battery using the active material that does not include a non-periodic crystal structure obtained by Comparative Example 2, the initial discharge capacity was lower than those of Examples 1 to 8.

According to at least one approach and example described above, an active material including a composite metal oxide is provided. The composite metal oxide contains an Mo element, an Nb element, and at least one element M. Element M is selected from the group consisting of Ti, V, Ta, Fe, Co, Mn, Ni, Bi, Sb, As, P, Cr, W, B, Na, K, Mg, Al, Ca, Y and Si. The crystal structure of the composite metal oxide has a non-periodic crystal structure. The composite metal oxide is included as spherical particles. The spherical particles are secondary particles of the composite metal oxide, an average particle size of primary particles thereof is from 10 nm to 300 nm, and an average particle size of the secondary particles is from 1 um to 10 um. The active material can provide an electrode that can realize a high-capacity and long-life secondary battery, a high-capacity and long-life secondary battery and battery pack, and a vehicle having the battery pack installed thereon.

The present disclosure also encompasses the following approaches of activematerials, electrodes, and the like:

1. An active material comprising a composite metal oxide containing an Mo element, an Nb element, and an element M, M being at least one selected from the group consisting of Ti, V, Ta, Fe, Co, Mn, Ni, Bi, Sb, As, P, Cr, W, B, Na, K, Mg, Al, Ca, Y and Si, a crystal structure of the composite metal oxide having a non-periodic crystal structure, the active material comprising the composite metal oxide as spherical particles, the spherical particles being secondary particles containing primary particles of the composite metal oxide having an average particle size from 10 nm to 300 nm, an average particle size of the secondary particles being from 1 $\mu$m to 10 $\mu$m.

2. The active material according to clause 1, wherein an average value $FU_{ave}$ of coefficients of form unevenness of the spherical particles is 0.8 or more.

3. The active material according to clause 1 or 2, wherein a BET specific surface area of the spherical particles is from 5 g/m$^2$ to 40 g/m$^2$.

4. An electrode comprising the active material according to any one of clauses 1 to 3.

5. The electrode according to clause 4, further comprising an active material-containing layer, the active material-containing layer comprising the active material.

6. A secondary battery comprising:

a positive electrode;
a negative electrode; and
an electrolyte,
the positive electrode or the negative electrode (3) comprising the electrode according to clause 4 or 5.

7. A battery pack comprising the secondary battery according to clause 6.

8. The battery pack according to clause 7, further comprising:

an external power distribution terminal; and
a protective circuit.

9. The battery pack according to clause 7 or 8, comprising plural of the secondary battery, the secondary batteries being electrically connected in series, in parallel, or in combination of in-series connection and in-parallel connection.

10. A vehicle comprising the battery pack according to any one of clauses 7 to 9.

11. The vehicle according to clause 10, wherein the vehicle comprises a mechanism configured to convert kinetic energy of the vehicle into regenerative energy.

While certain arrangements have been described, these arrangements have been presented by way of example only, and are not intended to limit the scope of the inventions. Indeed, the active materials, electrodes, and the like described herein may be embodied in a variety of other forms; furthermore various omissions, substitutions and changes in the form of the active materials, electrodes, and the like described herein may be made.

## Claims

1. An active material comprising a composite metal oxide containing an Mo element, an Nb element, and an element M, M being at least one selected from the group consisting of Ti, V, Ta, Fe, Co, Mn, Ni, Bi, Sb, As, P, Cr, W, B, Na, K, Mg, Al, Ca, Y and Si, a crystal structure (10) of the composite metal oxide having a non-periodic crystal structure, the active material comprising the composite metal oxide as spherical particles, the spherical particles being secondary particles containing primary particles of the composite metal oxide having an average particle size from 10 nm to 300 nm, an average particle size of the secondary particles being from 1 $\mu$m to 10 $\mu$m.

2. The active material according to claim 1, wherein an average value $FU_{ave}$ of coefficients of form unevenness of the spherical particles is 0.8 or more.

3. The active material according to claim 1 or 2, wherein a BET specific surface area of the spherical particles is from 5 g/m$^2$ to 40 g/m$^2$.

4. An electrode comprising the active material according to any one of claims 1 to 3.

5. The electrode according to claim 4, further comprising an active material-containing layer, the active material-containing layer comprising the active material.

6. A secondary battery (100) comprising:

   a positive electrode (5);
   a negative electrode (3); and
   an electrolyte,
   the positive electrode (5) or the negative electrode (3) comprising the electrode according to claim 4 or 5.

7. A battery pack (300) comprising the secondary battery (100) according to claim 6.

8. The battery pack (300) according to claim 7, further comprising:

   an external power distribution terminal (350) ; and
   a protective circuit (346).

9. The battery pack (300) according to claim 7 or 8, comprising plural of the secondary battery (100), the secondary batteries (100) being electrically connected in series, in parallel, or in combination of in-series connection and in-parallel connection.

10. A vehicle (400) comprising the battery pack (300) according to any one of claims 7 to 9.

11. The vehicle (400) according to claim 10, wherein the vehicle comprises a mechanism configured to convert kinetic energy of the vehicle (400) into regenerative energy.

F I G. 1

11

18

11a

19

11b — 18

19

11a

11a

19

11b

11b

19

11b

b

a

c

F I G. 2

F I G. 3

F I G. 4

F I G. 5

F I G. 6

F I G. 7

F I G. 8

F I G. 9

F I G. 10

F I G. 11

EP 4 435 894 A1

200nm

# FIG. 12

1μm

# FIG. 13

200nm

F I G. 14

1 μm

F I G. 15

500nm

F I G. 16

1 μm

F I G. 17

Europäisches Patentamt

European Patent Office

Office européen des brevets

# EUROPEAN SEARCH REPORT

Application Number

EP 23 19 4442

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | N.N.: "A basic guide to particle characterization", , 1 January 2015 (2015-01-01), XP093118075, Retrieved from the Internet: URL:https://www.cif.iastate.edu/sites/defa ult/files/uploads/Other_Inst/Particle%20Si ze/Particle%20Characterization%20Guide.pdf [retrieved on 2024-01-11] * the whole document * ----- | 1 | INV. H01M4/50 H01M4/52 |
| X | JP 2016 131158 A (TOSHIBA CORP) 21 July 2016 (2016-07-21) * paragraph [0146] – paragraph [0179] * ----- | 1-11 | |
| X | WO 2022/138104 A1 (PANASONIC IP MAN CO LTD [JP]) 30 June 2022 (2022-06-30) * paragraph [0063] – paragraph [0072] * ----- | 1-3 | |
| | | | TECHNICAL FIELDS SEARCHED (IPC) H01M |

The present search report has been drawn up for all claims

| Place of search | Date of completion of the search | Examiner |
|---|---|---|
| Munich | 25 January 2024 | Radeck, Stephanie |

EPO FORM 1503 03.82 (P04C01)

## ANNEX TO THE EUROPEAN SEARCH REPORT
## ON EUROPEAN PATENT APPLICATION NO.

EP 23 19 4442

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2024

| Patent document cited in search report | | Publication date | Patent family member(s) | | Publication date |
|---|---|---|---|---|---|
| JP 2016131158 | A | 21-07-2016 | JP | 6132945 B2 | 24-05-2017 |
| | | | JP | 2016131158 A | 21-07-2016 |
| WO 2022138104 | A1 | 30-06-2022 | CN | 116601796 A | 15-08-2023 |
| | | | EP | 4270529 A1 | 01-11-2023 |
| | | | JP | WO2022138104 A1 | 30-06-2022 |
| | | | WO | 2022138104 A1 | 30-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Space-group symmetry. International Tables for Crystallography. 2016, vol. A
- Let's use RIETAN-FP. **IZUMI NAKAI ; FUJIO IZUMI.** X-Ray Analysis Investigation Conversazione. The Japan Society for Analytical Chemistry, 2002
- Image Processing with ImageJ. *Biophotonics International,* July 2004